# EUROPÄISCHE PATENTSCHRIFT

(11) **EP 1 285 040 B1**
(45) Veröffentlichungstag und Bekanntmachung des Hinweises auf die Patenterteilung: **18.01.2006**
(21) Anmeldenummer: 01938184.7
(22) Anmeldetag: 07.05.2001
(51) Int. Cl.: C09K 11/06, C09K 11/07, G02F 1/15

(54) **ELEKTROCHROME VORRICHTUNG**
ELECTROCHROMIC DEVICE
DISPOSITIF ELECTROCHROME

(30) Priorität: 15.05.2000 DE 10023765
(43) Veröffentlichungstag der Anmeldung: 26.02.2003
(73) Patentinhaber: Bayer Innovation GmbH, 40225 Düsseldorf (DE)
(72) Erfinder: BERNETH, Horst, 51373 Leverkusen (DE); NEIGL, Ralf,, Yorktown Heights, NY 10598 (US); SHELEPIN, Igor, 141700 Dolgoprudnyi, Moscow region (RU); GAVRILOV, Vladimir, 141700 Dolgoprudnyi, Moscow region (RU)
(74) Vertreter: Thomaier, Jörg
(86) Internationale Anmeldenummer: PCT/EP2001/005135
(87) Internationale Veröffentlichungsnummer: WO 2001/088060

(56) Entgegenhaltungen:
- WO-A-97/30134
- WO-A-98/44384
- US-A- 4 902 108
- SUN X ET AL: "PHOTOCHROMISM OF DOUBLE-BRIDGED VIOLOGENS IN A POLAR POLYMER MATRIX" JOURNAL OF THE CHEMICAL SOCIETY, PERKIN TRANSACTIONS 1, CHEMICAL SOCIETY. LETCHWORTH, GB, 1996, Seiten 225-228, XP001013322 ISSN: 1472-7781 in der Anmeldung erwähnt
- ATTALLA M I ET AL: "FORMATION OF RADICAL TRICATIONS AND DIRADICAL DICATIONS BY THE POLAROGRAPHIC REDUCTION OF 1,1-ALKANEDIYL-BIS-(1'-ALKYL-4,4-BIPYRIDI NIUM) TETRAQUATERNARY SALTS" ZEITSCHRIFT FUER NATURFORSCHUNG, TEIL B: ANORGANISCHE CHEMIE, ORGANISCHE CHEMIE, VERLAG DER ZEITSCHRIFTEN FUER NATURFORSCHUNG,, DE, Bd. 39B, 1984, Seiten 74-78, XP001012631 in der Anmeldung erwähnt

## Beschreibung

Die vorliegende Erfindung betrifft eine elektrochrome Vorrichtung sowie elektrochrome Substanzen.

Elektrochrome Vorrichtungen sind bereits bekannt, beispielsweise aus D. Theis in Ullmann's Encyclopedia of Industrial Chemistry, Vol. A 8, S. 622, Verlag Chemie 1987 und WO-A 94/23333. Man unterscheidet zwei Grundtypen:
Typ 1: vollflächige elektrochrome Vorrichtung.
Typ 2: elektrochrome Anzeigevorrichtungen mit strukturierten Elektroden.

Typ 1 findet beispielsweise bei elektrisch abdunkelbaren Fensterscheiben oder elektrisch abblendbaren Autospiegeln Anwendung. Solche Vorrichtungen sind beispielsweise aus US-A 4 902 108 bekannt.

Typ 2 findet bei Segment- und Matrixanzeigen Verwendung. Solche Anzeigevorrichtungen sind beispielsweise in DE-A 196 31 728 vorgeschlagen worden. Derartige Vorrichtungen können transmissiv oder bei Verspiegelung reflektiv betrachtet werden.

In WO-A 94/23333 werden elektrochrome Materialien verschiedener Bauweise gegenübergestellt, die aber nicht als Anzeigevorrichtungen verwendet werden:
Bauweise a: Die elektrochromen Substanzen liegen als Film oder Schicht fest auf den Elektroden (Ullmann, s.o.).
Bauweise b: Die elektrochromen Substanzen werden beim Redoxprozeß auf den Elektroden als Schicht abgeschieden (Ullmann, s.o.).
Bauweise c: Die elektrochromen Substanzen bleiben permanent in Lösung.

Für Bauweise a) ist als elektrochromes Material das Paar Wolframoxid/Palladiumhydrid das bekannteste.

Für Bauweise b) sind Viologene als elektrochrome Substanzen beschrieben worden. Diese Vorrichtungen sind nicht selbstlöschend, das erzeugte Bild bleibt also nach dem Abschalten des Stromes bestehen und kann nur durch Umpolen der Spannung wieder gelöscht werden. Solche Vorrichtungen sind nicht besonders beständig und erlauben keine hohe Zahl an Schaltzyklen.

Zudem sind insbesondere solche mit Wolframoxid/Palladiumhydrid aufgebauten Zellen wegen der Lichtstreuung an diesen elektrochromen Schichten nicht im durchfallenden Licht zu betreiben, sondern lediglich reflektiv.

Aus Elektrokhimiya **13**, 32-37 (1977), US-A 4 902 108 und US-A 5 140 455 ist ein elektrochromes System dieser letztgenannten Bauweise c) bekannt. In einer elektrochromen Zelle, die aus leitfähig beschichteten Glasplatten aufgebaut ist, ist eine Lösung eines Paares elektrochromer Substanzen in einem inerten Lösungsmittel enthalten.

Als Paar von elektrochromen Substanzen wird je eine elektrochemisch reversibel reduzierbare und eine reversibel oxidierbare Substanz verwendet. Beide sind im Grundzustand farblos oder nur schwach gefärbt. Unter Einfluß einer elektrischen Spannung wird die eine Substanz reduziert, die andere oxidiert, wobei beide farbig werden. Nach Abschalten der Spannung bildet sich bei beiden Substanzen der Grundzustand wieder zurück, wobei Entfärbung bzw. Farbaufhellung auftritt.

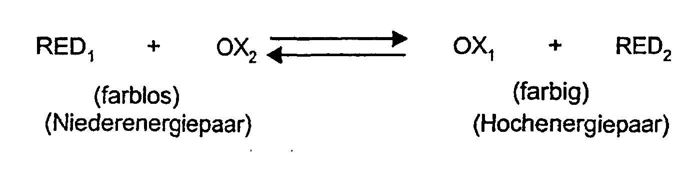

Aus US-A 4 902 108 ist bekannt, dass solche Paare von Redoxsubstanzen geeignet sind, bei denen die reduzierbare Substanz wenigstens zwei chemisch reversible Reduktionswellen im Cyclischen Voltammogramm und die oxidierbare Substanz entsprechend wenigstens zwei chemisch reversible Oxidationswellen besitzt.

Für elektrochrome Zellen der Bauweise c) sind verschiedene Anwendungen beschrieben worden. So können sie beispielsweise als Automobilrückspiegel ausgebildet sein, der bei Nachtfahrt durch Anlegen einer Spannung abgedunkelt werden kann und somit das Blenden durch Scheinwerfer nachfolgender Fahrzeuge verhindert (US-A 3 280 701, US-A 4 902 108, EP-A 0 435 689). Weiterhin können solche Zellen auch in Fensterscheiben oder Auto-Sonnendächern eingesetzt werden, wo sie nach Anlegen einer Spannung das Sonnenlicht abdunkeln. Ebenfalls beschrieben ist die Anwendung solcher Vorrichtungen als elektrochrome Anzeigevorrichtungen, beispielsweise in Segment- oder Matrix-Displays mit strukturierten Elektroden (DE-A 196 31 728).

Die elektrochromen Zellen bestehen normalerweise aus einem Paar Glasplatten, von denen im Falle des Autospiegels eine verspiegelt ist. Eine Seite dieser Scheiben ist mit einer lichtdurchlässigen, elektrisch leitfähigen Schicht, beispielsweise Indium-Zinn-Oxid (ITO), flächig beschichtet, wobei im Falle der Anzeigevorrichtungen diese leitfähige Beschichtung in elektrisch voneinander getrennte Segmente aufgeteilt ist, die einzeln kontaktiert sind. Aus diesen Scheiben wird nun eine Zelle aufgebaut, indem sie mit ihrer einander zugewandten elektrisch leitfähig beschichteten Seite über einen Dichtungsring zu einer Zelle verbunden werden. In diese Zelle wird nun über eine Öffnung eine elektrochrome Flüssigkeit eingefüllt und die Zelle dicht verschlossen. Über die ITO-Schichten werden die beiden Scheiben mit einer Spannungsquelle verbunden.

Für viele Anwendungen ist es wichtig, den Farbton der elektrochromen Vorrichtung im stromführenden Zustand den jeweiligen Erfordernissen anpassen zu können. Häufig wird ein möglichst neutraler Farbton, z. B. ein Grau gewünscht. Bewährte elektrochrome Verbindungen sind Dipyridiniumsalze (Viologene) und Dihydrophenazine, die als Mischung jedoch ein grünstichiges Blau ergeben (z. B. US-A 4 902 108, WO 97/30134). Aus WO 98/44384 sind Derivate von Dipyridiniumsalzen und Dihydrophenazinen bekannt, deren Farbtöne sich von den Grundkörpern unterscheiden. Durch geeignete Mischung von bis zu 5 solcher elektrochromer Verbindungen lässt sich ein vorgewählter Farbton, beispielsweise auch ein Grau, einstellen. Solche komplexen Mischungen sind aber schwierig auszubalancieren, vor allem dann, wenn die elektrochrome Vorrichtung bei verschiedene Spannungen betrieben werden soll und der Farbton spannungsunabhängig sein soll. Auch sind die in WO 98/44384 beschriebenen Derivate der Dipyridiniumsalze und Dihydrophenazine nicht immer leicht zugänglich.

Es bestand deshalb Bedarf an einer elektrochromen Verbindung, welche im Redoxverhalten gut mit Dipyridiniumsalzen und Dihydrophenazinen harmoniert, in der Mischung mit Dipyridiniumsalzen und Dihydrophenazinen in den in elektrochromen Zellen üblichen Lösungsmitteln die fehlende Rotkomponente liefert und synthetisch gut zugänglich ist.

Es wurde nun gefunden, dass verbrückte Viologene der Formel (CC) 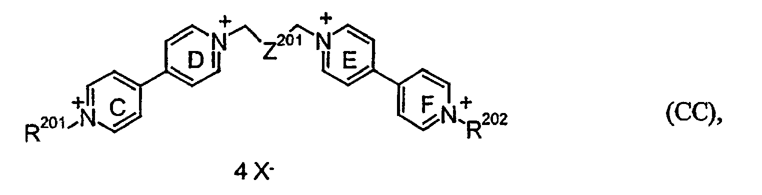 worin
- R²⁰¹ und R²⁰²: unabhängig voneinander für Alkyl, Cycloalkyl, Alkenyl, Aralkyl, Aryl, -[C(PQ)]⁻ oder eine bivalente Brücke B stehen,
- Z²⁰¹: für einen bivalenten Rest der Formeln CR²¹⁰R²¹¹, O, C=O oder o-Phenylen steht,
- R²¹⁰ und R²¹¹: unabhängig voneinander für Wasserstoff, Methyl oder Ethyl stehen oder
- CR²¹⁰R²¹¹: für C₃- bis C₇-Cycloalkan-1,1-diyl steht,
die Ringe C, D, E und F unabhängig voneinander durch bis zu 4 Alkyl- und/oder Alkoxy-Reste substituiert sein können oder die Ringe C und D bzw. die Ringe E und F über eine -(CH₂)₄- oder -CH=CH-CH=CH- Brücke verbunden sein können,
- P und Q: unabhängig voneinander für -CN oder -COO-Alkyl stehen und
- X⁻: für ein Anion steht,

eine solche gewünschte elektrochrome Verbindung darstellen.

Ganz besonders überraschend wurde gefunden, dass verbrückte Viologene der Formel (CC) in elektrochromen Vorrichtungen verglichen mit entsprechenden nicht verbrückten Viologenen zu einer deutlich verbesserten Lichtechtheit führen.

Gegenstand der Erfindung ist demnach eine elektrochrome Vorrichtung, enthaltend ein Paar Glas- oder Kunststoffplatten oder Kunststofffolien, von denen mindestens eine Platte oder Folie, vorzugsweise beide Platten oder Folien auf jeweils einer Seite mit einer elektrisch leitfähigen Beschichtung versehen sind, von denen wenigstens eine Platte oder Folie und ihre leitfähige Beschichtung transparent sind, von denen die andere verspiegelt sein kann und von denen wenigstens bei einer der beiden Platten oder Folien die elektrisch leitfähige Schicht in getrennte, einzeln kontaktierte Flächensegmente aufgeteilt sein kann, wobei die Platten oder Folien über einen Dichtungsring auf den Seiten ihrer leitfähigen Beschichtung zusarammengefügt sind, und das Volumen, gebildet aus den beiden Platten oder Folien und dem Dichtungsring, mit einem elektrochromen Medium gefüllt ist, das mindestens eine reduzierbare elektrochrome Substanz OX₂ und mindestens eine oxidierbare elektrochrome Substanz RED₁ enthält, dadurch gekennzeichnet, dass ein OX₂ der Formel 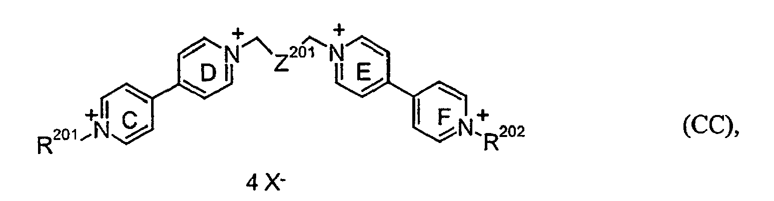 entspricht,
worin
- R²⁰¹ und R²⁰²: unabhängig voneinander für Alkyl, Cycloalkyl, Alkenyl, Aralkyl, Aryl, -[C(PQ)]⁻ oder eine bivalante Brücke B stehen,
- Z²⁰¹: für einen bivalenten Rest der Formeln CR²¹⁰R²¹¹, C=O oder o-Phenylen steht,
- R²¹⁰ und R²¹¹: unabhängig voneinander für Wasserstoff, Methyl oder Ethyl stehen oder
- CR²¹⁰R²¹¹: für C₃- bis C₇-Cycloalkan-1,1-diyl steht,
die Ringe C, D, E und F unabhängig voneinander durch bis zu 4 Alkyl- und/oder Alkoxy-Reste substituiert sein können oder die Ringe C und D bzw. die Ringe E und F über eine -(CH₂)₄- oder-CH=CH-CH=CH- Brücke verbunden sein können
- P und Q: unabhängig voneinander für -CN oder -COO-Alkyl stehen und
- X-: für ein Anion steht.

Einige verbrückte Bipyridiniumsalze der Formel (CC) sind bereits bekannt (z.B. Bull. Chem. Soc. Japan 55 (1982) 513; J.Amer. Chem. Soc. **108** (1986) 3380; Z. Naturforsch. **39b** (1984 74; Tetrahedron **42** (1986) 1665; J. Chem. Soc., Perkin Trans. 2**1996** 225).

Die Verwendung von Bipyridiniumsalzen (Viologenen), die über eine Brücke verbunden sind, in elektrochromen Vorrichtungen ist beispielsweise aus US-A 4 902 108 bekannt. Dort ist jedoch die Brücke allgemein formuliert. Speziell genannt ist nur ein Derivat mit einer C₄-Brücke (tetramethylene bis[4(1-benzyl-pyridine-4'-yl)pyridinium]tetrafluoroborate, example II, VI). Diese Verbindung sowie solche mit längerer Brücke ergeben bei Reduktion ebenso wie nicht verbrückte Viologene eine Blaufärbung und sind folglich nicht als die gewünschte Rotkomponente geeignet.

Bevorzugt ist eine elektrochrome Vorrichtung enthaltend mindestens ein OX₂ der Formel (CC),
worin
- R²⁰¹ und R²⁰²: unabhängig voneinander für C₁- bis C₁₈-Alkyl, C₃- bis C₈-Cycloalkyl, C₂- bis C₁₈-Alkenyl, C₇- bis C₁₀-Aralkyl, C₆- bis C₁₀-Aryl oder -[C(CN)₂]⁻, -[C(CN)COO-C₁- bis -C₄-Alkyl]⁻ oder -[C(COO-C₁- bis -C₄-Alkyl)₂]⁻ stehen,
- Z²⁰¹: für CH₂, C=O oder o-Phenylen steht,
die Ringe C, D, E und F unabhängig voneinander durch bis zu 4 Methyl-Reste substituiert sein können oder die Ringe C und D bzw. die Ringe E und F über eine -(CH₂)₄- oder -CH=CH-CH=CH- Brücke verbunden sein können und
- X⁻: für ein Anion steht.

Besonders bevorzugt ist eine elektrochrome Vorrichtung enthaltend mindestens ein OX₂ der Formel (CC),
worin
- R²⁰¹ und R²⁰²: unabhängig voneinander für Methyl, Ethyl, Propyl, Butyl, Pentyl, Hexyl, Heptyl, Octyl, Benzyl, Phenethyl, Phenylpropyl, Phenylbutyl oder Phenyl stehen,
- Z²⁰¹: für CH₂, C=O oder o-Phenylen steht,
die Ringe C und D bzw. die Ringe E und F über eine -CH=CH-CH=H- Brücke verbunden sein können und
- X⁻: für ein Anion steht.

Ganz besonders bevorzugt sind R²⁰¹ und R²⁰² sowie die Ringe C bis F gleich.

In ganz besonderem Maße bevorzugt stehen
- R²⁰¹ und R²⁰²: für Methyl, Butyl, Heptyl oder Phenylpropyl und sind untereinander gleich
- Z²⁰¹: für CH₂ und
die Ringe C und D bzw. E und F sind nicht über eine Brücke verbunden.

Ein OX₂ der Formel (CC) kann auch Bestandteil einer oligo- oder polymeren Verbindung sein.

Bevorzugt ist folglich auch eine elektrochrome Vorrichtung enthaltend mindestens ein OX₂ der Formel (CC),
worin
mindestens einer der Reste R²⁰¹ und R²⁰² für eine bivalente Brücke B steht und gegebenenfalls der andere für C₁- bis C₁₈-Alkyl, C₃- bis C₈-Cycloalkyl, C₂₋bis C₁₈-Alkenyl, C₇- bis C₁₀-Aralkyl, C₆- bis C₁₀-Aryl oder -[C(CN)₂]⁻, -[C(CN)COO-C₁- bis -C₄-Alkyl]⁻ oder -[C(COO-C₁- bis -C₄-Alkyl)₂]⁻ steht,
- Z²⁰¹: für CH₂, C=O oder o-Phenylen steht,
die Ringe C, D, E und F unabhängig voneinander durch bis zu 4 Methyl-Reste substituiert sein können oder die Ringe C und D bzw. die Ringe E und F über eine -(CH₂)₄- oder -CH=CH-CH=CH- Brücke verbunden sein können und
- X⁻: für ein Anion steht,

wobei über die Brücke B eine weitere elektrochrome Substanz der Formel (CC) angebunden sein kann oder aber eine andere elektrochrome Substanz OX₂ bzw. RED₁.

Besonders bevorzugt ist eine elektrochrome Vorrichtung enthaltend mindestens ein OX₂ der Formel (CC), das Bestandteil einer der Formeln 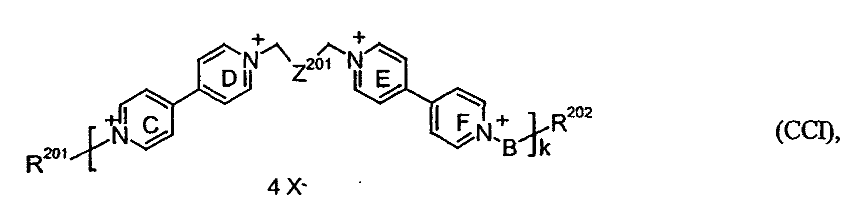 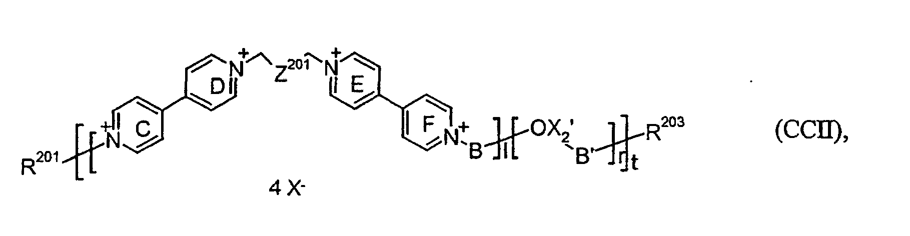 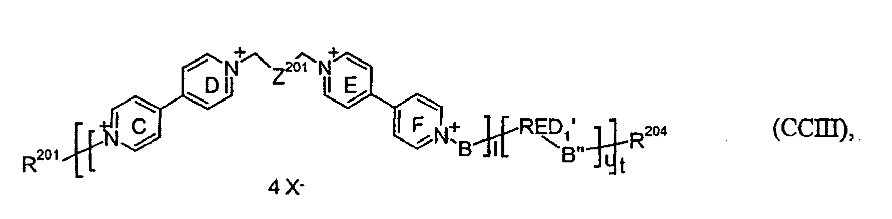 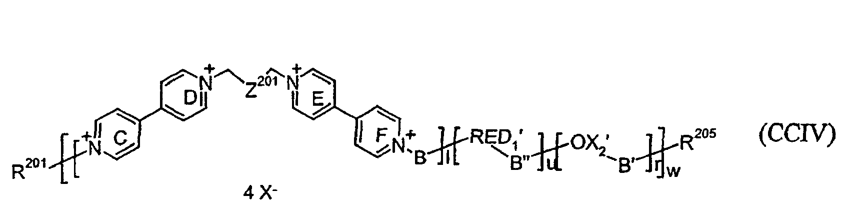 ist,
worin
- R²⁰¹ und -B-R²⁰²: unabhängig voneinander für Methyl, Ethyl, Propyl, Butyl, Pentyl, Hexyl, Heptyl, Octyl, Benzyl, Phenethyl, Phenylpropyl, Phenylbutyl oder Phenyl stehen oder
- R²⁰¹ und R²⁰²: in Formel (CCI) gemeinsam eine direkte Bindung bedeuten,
und
- R²⁰¹: in Formel (CCII), (CCIII) und (CCIV) für-B-[OX₂'-B'-]r-R²⁰³ beziehungsweise -B-[RED₁'-B"-]ᵤ-R²⁰⁴ beziehungsweise -B-[RED₁'-B"-]ᵤ-[OX₂'-B'-]ᵣ-R²⁰⁵ stehen kann,
- Z²⁰¹: für CH₂, C=O oder o-Phenylen steht,
die Ringe C und D bzw. die Ringe E und F über eine -CH=CH-CH=CH- Brücke verbunden sein können,
- B, B' und B": unabhängig voneinander für eine bivalente Brücke stehen,
- -B'-R²⁰³, -B"-R²⁰⁴ und -B'-R²⁰⁵: unabhängig voneinander für Wasserstoff oder für Methyl, Ethyl, Propyl, Butyl, Pentyl, Hexyl, Heptyl, Octyl, Benzyl, Phenethyl, Phenylpropyl, Phenylbutyl oder Phenyl stehen,
- OX₂`: für den Rest eines reversibel elektrochemisch reduzierbaren Redoxsystems steht, und
- RED₁': für den Rest eines reversibel elektrochemisch oxidierbaren Redoxsystems steht,
- k: für eine ganze Zahl von 2 bis 1000 steht,
- l, r und u: unabhängig für eine ganze Zahl von 1 bis 100 stehen,
- t und w: unabhängig voneinander für eine ganze Zahl von 1 bis 1000 stehen und
- X-: für ein Anion steht.

Die Formeln sind so zu verstehen, dass die verschiedenen mit Klammer und Index gekennzeichneten Formelteile in beliebiger Reihenfolge zueinander stehen können. Mit beispielsweise Formel (CCIII) soll folglich auch beispielsweise die folgende Formel gemeint sein:

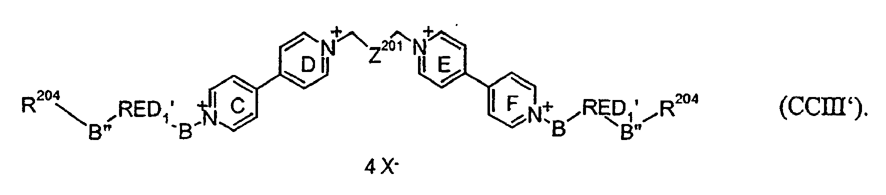

Bevorzugt stehen B, B' und B" für eine Brücke der Formeln -(CH₂)ₙ- oder -[Y¹ₛ(CH₂)ₘ-Y²]ₒ-(CH₂)ₚ-Y³_{q}-, die durch C₁- bis C₄-Alkyl, C₁- bis C₄-Alkoxy, Halogen oder Phenyl substituiert sein kann,
- Y¹ bis Y³: unabhängig voneinander für O, S, NR⁶⁰, COO, CONH, NHCONH, Cyclopentandiyl, Cyclohexandiyl, Phenylen oder Naphthylen stehen,
- R⁶⁰: C₁- bis C₆-Alkyl, C₂- bis C₆-Alkenyl, C₄- bis C₇-Cycloalkyl, C₇- bis C₁₅-Ar-alkyl oder C₆- bis C₁₀-Aryl bedeutet,
- n: eine ganze Zahl von 1 bis 12 bedeutet,
- m und p: unabhängig voneinander eine ganze Zahl von 0 bis 8 bedeuten,
- o: eine ganze Zahl von 0 bis 6 bedeutet und
- q und s: unabhängig voneinander 0 oder 1 bedeuten,

wobei sie aber in den Resten -B-R²⁰², -B'-R²⁰³, -B"-R²⁰⁴ und -B'-R²⁰⁵ für eine direkte Bindung stehen.

Besonders bevorzugt stehen B, B' und B" für eine Brücke der Formeln -(CH₂)ₙ- oder -(CH₂)ₘ-C₆H₄-(CH₂)ₚ-,
worin
- n: eine ganze Zahl von 2 bis 8, insbesondere 3 bis 5 bedeutet,
- m und p: unabhängig voneinander eine ganze Zahl von 1 bis 4, insbesondere 1 bedeuten und

der Rest -C₆H₄- o-, m- oder p-ständig substituiert ist,
wobei sie aber in den Resten -B-R²⁰², -B'-R²⁰³, -B"-R²⁰⁴ und -B'-R²⁰⁵ für eine direkte Bindung stehen.

Die bevorzugten Bedeutungen von OX₂' und RED₁' werden weiter unten erläutert.

Ganz besonders bevorzugt ist eine elektrochrome Vorrichtung enthaltend eine elektrochrome Substanz der Formel (CCI),
worin
- R²⁰¹ und -B-R²⁰²: für Methyl, Butyl, Heptyl oder Phenylpropyl stehen und untereinander gleich sind,
- Z²⁰¹: für CH₂ steht,
- B: für -(CH₂)₃- oder -(CH₂)₄- steht,
- k: für eine ganze Zahl von 2 bis 100 steht,
die Ringe C und D bzw. E und F nicht verbunden sind und
- X⁻: für ein Anion steht.

Ebenfalls ganz besonders bevorzugt ist eine elektrochrome Vorrichtung enthaltend eine elektrochrome Substanz der Formel (CCIII),
worin
- R²⁰¹: für Methyl, Butyl Heptyl oder Phenylpropyl steht,
- Z²⁰¹: für CH₂ steht,
- B: für -(CH₂)₃- oder -(CH₂)₄- steht,
- l, u und t: 1 bedeuten,
- RED₁'-B"-R²⁰⁴: für den Rest eines reversibel elektrochemisch oxidierbaren Redoxsystems steht, wie es weiter unten näher erläutert wird,
die Ringe C und D bzw. E und F nicht verbunden sind und
- X⁻: für ein Anion steht.

Die erfindungsgemäße elek-trochrome Vorrichtung enthält neben elektrochromen Substanzen OX₂ der Formeln (CC), (CCI) und (CCII) mindestens eine elektrochrome Substanz RED₁. Sie kann aber auch weitere RED₁ und/oder OX₂ enthalten. Dies gilt auch für die erfindungsgemäßen elektrochromen Vorrichtungen, die elektrochrome Substanzen der Formeln (CCIII) und/oder (CCIV) enthalten.

Durch Auswahl der elektrochromen Verbindungen RED₁ und OX₂ und/oder Mischungen davon lassen sich beliebige monochrome Farbtöne einstellen. Für eine polychrome Farbdarstellung können zwei oder mehrere solcher elektrochromer Vorrichtungen flächig aufeinander gelegt werden, wobei jede dieser Vorrichtungen einen anderen Farbton erzeugen kann. Vorzugsweise wird ein solcher Stapel so aufgebaut, dass die sich berührenden Vorrichtungen eine lichtdurchlässige Platte gemeinsam haben, die dann auch auf beiden Seiten leitfähig beschichtet ist und je nach Ausführung in Segmente unterteilt ist. Beispielsweise besteht dann ein Stapel aus drei elektrochromen Vorrichtungen aus mindestens vier Platten. Durch Einschalten von Segmenten in verschiedenen dieser gestapelten Vorrichtungen lassen sich mehrfarbige Anzeigen realisieren. Werden hintereinander liegende Segmente verschiedener solcher Vorrichtungen eingeschaltet, erhält man Mischfarben. So lassen sich im Rahmen einer Trichromie beliebige Farben darstellen, also beispielsweise bunte Bilder.

Bevorzugt sind aber solche erfindungsgemäßen elektrochromen Vorrichtungen, die durch Mischung der elektrochromen Substanzen der Formeln (CC) bis (CCIV) untereinander und/oder mit anderen geeigneten elektrochromen Substanzen OX₂ und/oder RED₁ im stromführenden Zustand eine graue oder schwarze Färbung aufweisen.

Geeignete reduzierbare elektrochrome Substanzen OX₂ und oxidierbare elektrochrome Substanzen RED₁ sind folgende, wobei
a) die reduzierbare Substanz mindestens eine, vorzugsweise wenigstens zwei chemisch reversible Reduktionswellen im cyclischen Voltammogramm und die oxidierbare Substanz entsprechend mindestens eine, vorzugsweise wenigstens zwei chemisch reversible Oxidationswellen besitzen, oder
b) die reduzierbare Substanz und die oxidierbare Substanz über eine Brücke B kovalent aneinander gebunden sind, oder
c) als reduzierbare und/oder oxidierbare Substanz solche ausgewählt sind, bei denen der reversible Übergang zwischen der oxidierbaren Form und der reduzierbaren Form oder umgekehrt mit dem Bruch bzw. dem Aufbau einer σ -Bindung verbunden ist, oder
d) die reduzierbare Substanz und/oder die oxidierbare Substanz Metallsalze oder Metallkomplexe sind von solchen Metallen, die in mindestens zwei Oxidationsstufen existieren, oder
c) die reduzierbare und/oder oxidierbare Substanz Oligo- und Polymere sind, die mindestens eines der genannten Redoxsysteme, aber auch Paare solcher Redoxsysteme, wie sie unter a) bis d) definiert sind, enthalten.

Im Sinne der Erfindung geeignete OX₂ und RED₁ sind solche Substanzen, die bei ihrer Reduktion bzw. Oxidation an der Kathode bzw. Anode in dem genannten Lösungsmittel Produkte RED₂ und OX₁ liefern, die keine chemische Folgereaktion eingehen, sondern komplett wieder zu OX₂ und RED₁ oxidiert bzw. reduziert werden können.

Geeignete reduzierbare Substanzen OX₂ sind beispielsweise 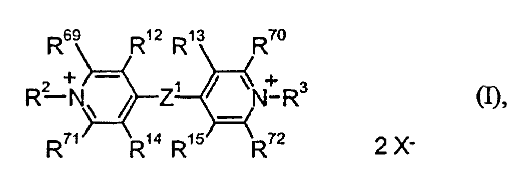 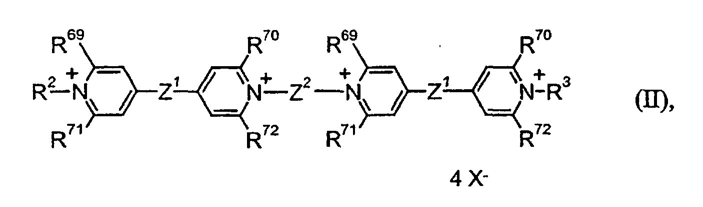 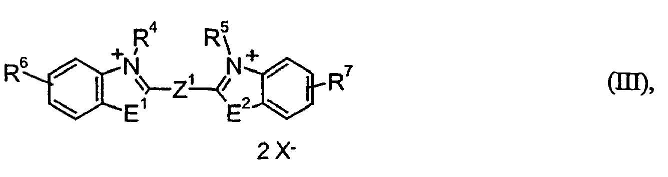 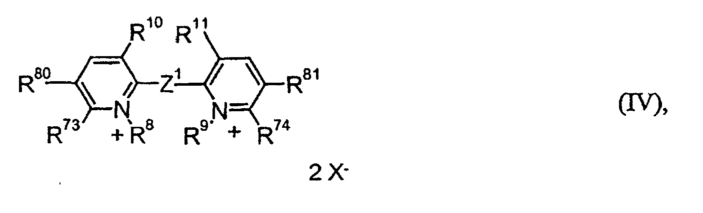 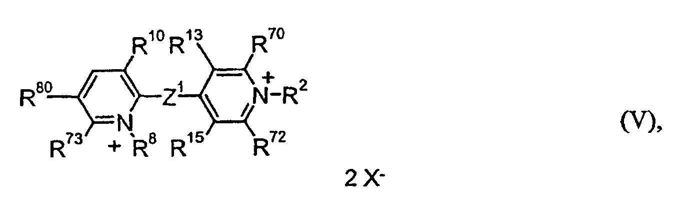 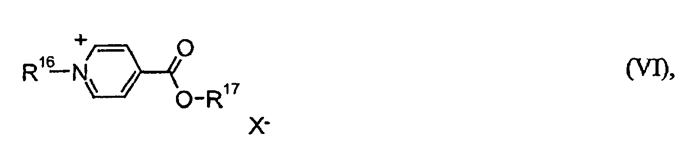 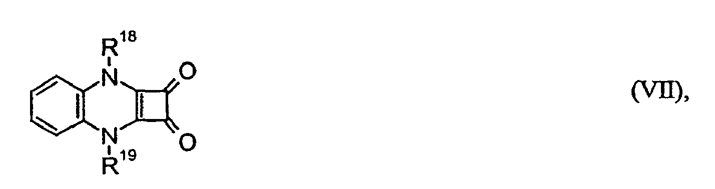 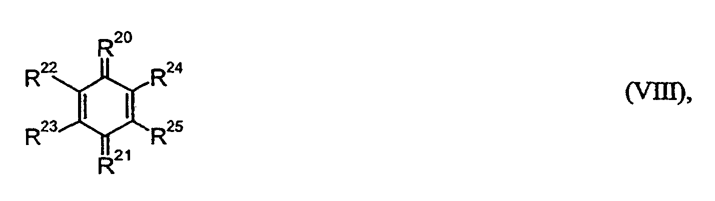 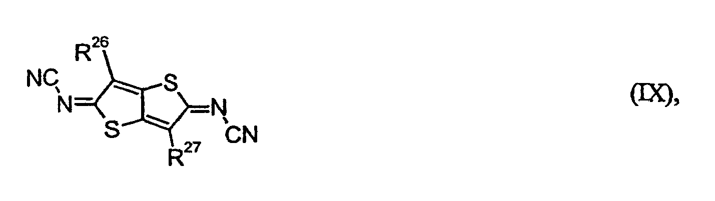 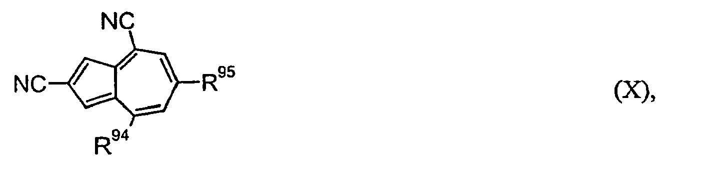 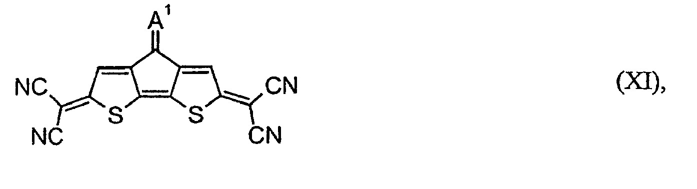 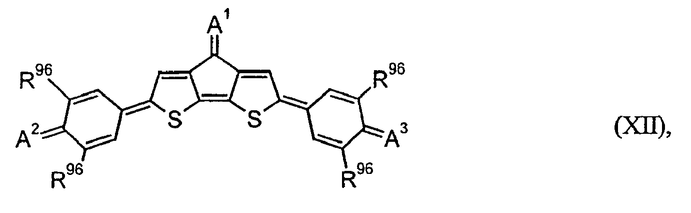 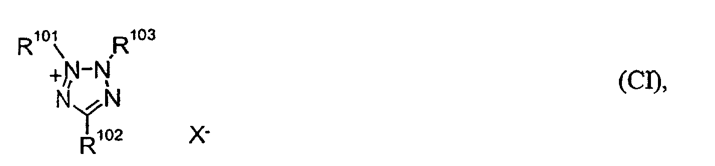 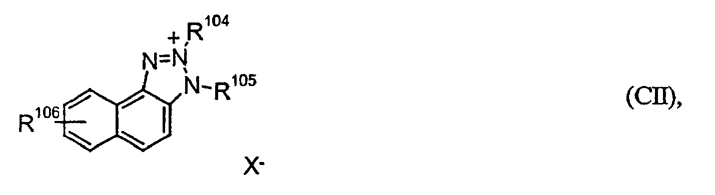 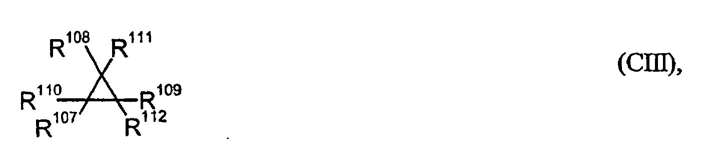 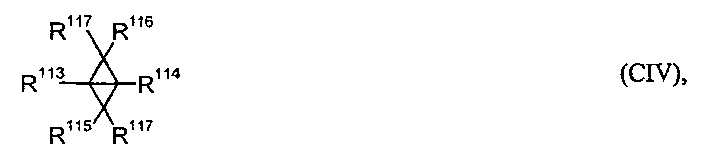
worin
- R² bis R⁵, R⁸, R⁹, R¹⁶ bis R¹⁹: unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten oder
- R⁴; R⁵ bzw. R⁸; R⁹: gemeinsam eine -(CH₂)₂- oder -(CH₂)₃-Brücke bilden können,
- R⁶, R⁷ und R²² bis R²⁵: unabhängig voneinander Wasserstoff, C₁- bis C₄-Alkyl, C₁-bis C₄-Alkoxy, Halogen, Cyan, Nitro oder C₁- bis C₄-Alkoxycarbonyl bedeuten oder
- R²²; R²³ und/oder R²⁴; R²⁵: eine -CH=CH-CH=CH-Brücke bilden können,
- R¹⁰; R¹¹, R¹⁰; R¹³, R¹²; R¹³ und R¹⁴; R¹⁵: unabhängig voneinander Wasserstoff oder paarweise eine -(CH₂)₂-, -(CH₂)₃- oder -CH=CH-Brücke bedeuten,
- R²⁰ und R²¹: unabhängig voneinander O, N-CN, C(CN)₂ oder N-C₆- bis C₁₀-Aryl bedeuten,
- R²⁶ und R²⁷: Wasserstoff, C₁- bis C₄-Alkyl, C₁- bis C₄-Alkoxy, Halogen, Cyan, Nitro, C₁- bis C₄-Alkoxycarbonyl oder C₆- bis C₁₀-Aryl bedeuten,
- R⁶⁹ bis R⁷⁴, R⁸⁰ und R⁸¹: unabhängig voneinander Wasserstoff oder C₁- bis C₆-Alkyl bedeuten oder
- R⁶⁹; R¹², R⁷⁰; R¹³, R⁷³; R⁸⁰ und/oder R⁷⁴; R⁸¹: gemeinsam eine -CH=CH-CH=CH-Brücke bilden,
- E¹ und E²: unabhängig voneinander O, S, NR¹ oder C(CH₃)₂ bedeuten oder
- E¹ und E²: gemeinsam eine -N-(CH₂)₂-N-Brücke bilden,
- R¹: C₁- bis C₁₈-Alkyl, C₂- bis C₁₂-Alkenyl, C₄- bis C₇-Cycloalkyl, C₇- bis C₁₅-Aralkyl, C₆- bis C₁₀-Aryl bedeutet,
- Z¹: eine direkte Bindung, -CH=CH-, -C(CH₃)=CH-, -C(CN)=CH-, -CCl=CCl-, -C(OH)=CH-, -CCl=CH-, -C≡C-, -CH=N-N=CH-, -C(CH₃)=N-N=C(CH₃)-oder -CCl=N-N=CCl- bedeutet,
- Z²: -(CH₂)ᵣ- oder -CH₂-C₆H₄-CH₂- bedeutet,
- r: eine ganze Zahl von 1 bis 10 bedeutet,
- R⁹⁴ und R⁹⁵: unabhängig voneinander Wasserstoff oder Cyano bedeuten,
- R¹⁰¹ bis P¹⁰⁵: unabhängig voneinander C₆- bis C₁₀-Aryl oder einen ggf. benzanellierten aromatischen oder quasiaromatischen fünf- oder sechsgliedrigen heterocyclischen Ring bedeuten,
- R¹⁰⁷, R¹⁰⁹, R¹¹³ und R¹¹⁴: unabhängig voneinander einen Rest der Formeln (CV) bis (CVII)

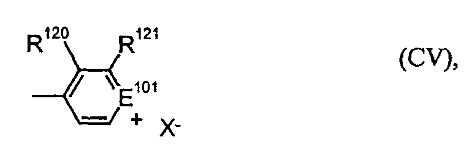

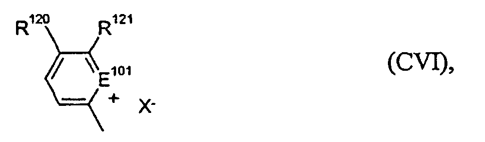

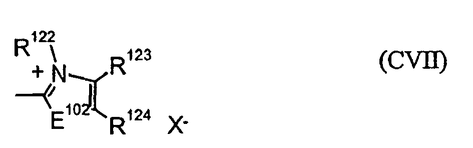

bedeuten,
- R¹⁰⁸, R¹¹⁵ und R¹¹⁶: unabhängig voneinander C₆- bis C₁₀-Aryl oder einen Rest der Formel (CV) bedeuten,
- R¹¹⁰ bis R¹¹², R¹¹⁷ und R¹¹⁸: unabhängig voneinander Wasserstoff, C₁- bis C₄-Alkyl, Halogen oder Cyano bedeuten,
- E¹⁰¹ und E¹⁰²: unabhängig voneinander O, S oder N-R¹¹⁹ bedeuten,
- R¹¹⁹ und R¹²²: unabhängig voneinander C₁- bis C₁₈-Alkyl, C₂- bis C₈-Alkenyl, C₄- bis C₇-Cycloalkyl, C₇- bis C₁₅-Aralkyl oder C₆- bis C₁₀-Aryl bedeuten,
- R¹⁰⁶, R¹²⁰, R¹²¹, R¹²³ und R¹²⁴: unabhängig voneinander Wasserstoff, C₁- bis C₄-Alkyl, C₁- bis C₄-Alkoxy, Halogen, Cyano, Nitro oder C₁- bis C₄-Alkoxy-carbonyl bedeuten oder
- R¹²⁰, R¹²¹ bzw. R¹²³, R¹²⁴: gemeinsam eine -CH=CH-CH=CH-Brücke bilden,
- A¹, A² und A³: unabhängig voneinander O oder C(CN)₂ bedeuten,
- R⁹⁶: Wasserstoff, Phenyl oder tert.-Butyl bedeutet und
- X⁻: ein unter den Bedingungen redox-inertes Anion bedeutet.

Geeignete oxidierbare Substanzen RED₁ sind beispielsweise 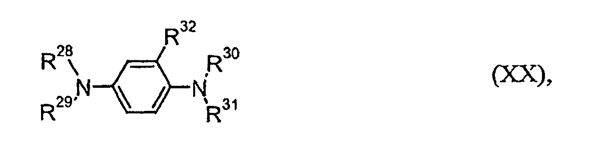 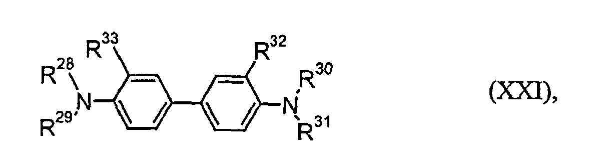 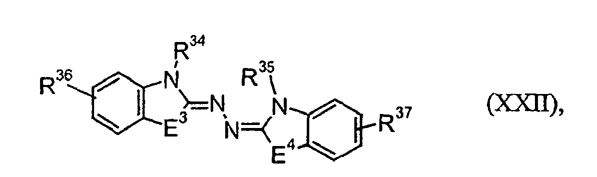 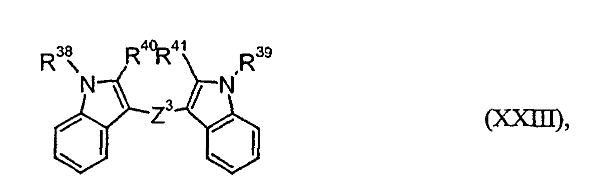 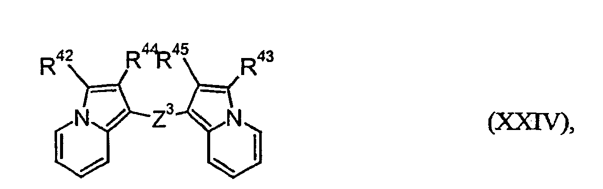 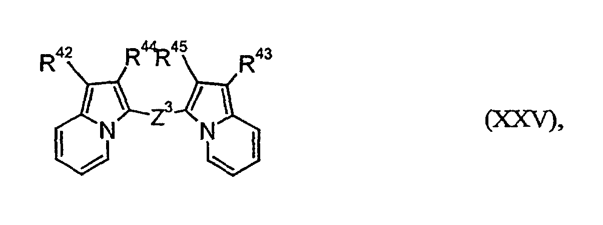 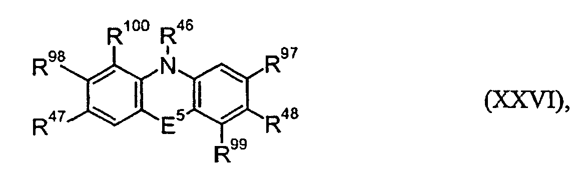 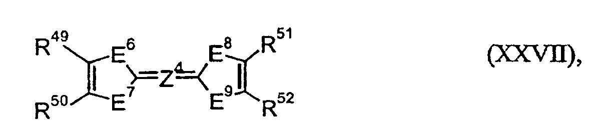 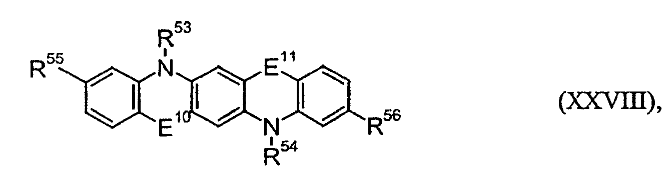 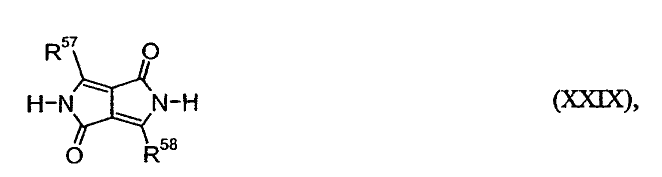 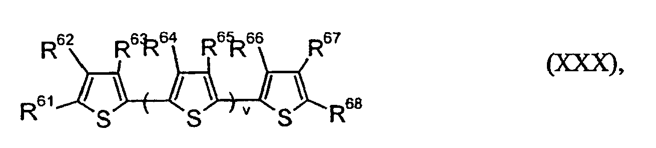 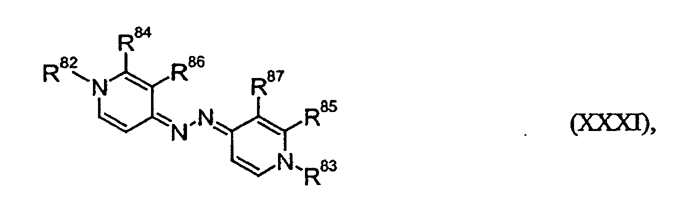 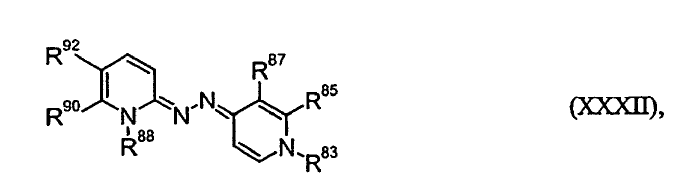 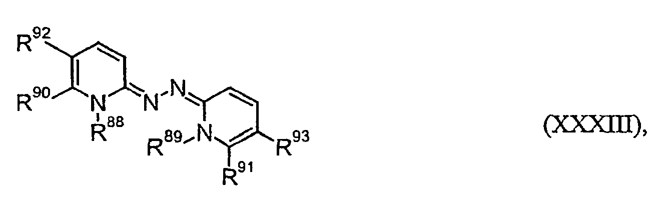
worin
- R²⁸ bis R³¹, R³⁴, R³⁵, R³⁸, R³⁹, R⁴⁶, R⁵³ und R⁵⁴: unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten,
- R³², R³³, R³⁶, R³⁷, R⁴⁰, R⁴¹, R⁴² bis R⁴⁵, R⁴⁷, R⁴⁸, R⁴⁹ bis R⁵², R⁵⁵ bis R⁵⁸ und R⁹⁷ bis R¹⁰⁰: unabhängig voneinander Wasserstoff, C₁- bis C₄-Alkyl, C₁- bis C₄-Alkoxy, Halogen, Cyan, Nitro, C₁- bis C₄-Alkoxycarbonyl, C₆- bis C₁₀-Aryl bedeuten

und
- R⁵⁷ und R⁵⁸: zusätzlich einen aromatischen oder quasiaromatischen fünf- oder sechsgliedrigen heterocyclischen Ring, der gegebenenfalls benzanneliert ist, bedeuten und R⁴⁸ zusätzlich NR⁷⁵R⁷⁶ bedeutet oder
- R⁴⁹; R⁵⁰ und/oder R⁵¹; R⁵²: eine -(CH₂)₃-, -(CH₂)₄-, -(CH₂)₅- oder -CH=CH-CH=CH-Brücke bilden,
- Z³: eine direkte Bindung, eine -CH=CH- oder -N=N-Brücke bedeutet,
- =Z⁴=: eine direkte Doppelbindung, eine =CH-CH= oder =N-N=-Brücke bedeutet,
- E³ bis E⁵, E¹⁰ und E¹¹: unabhängig voneinander O, S, NR⁵⁹ oder C(CH₃)₂ bedeuten und
- E⁵: zusätzlich C=O oder SO₂ bedeutet,
- E³ und E⁴: unabhängig voneinander zusätzlich -CH=CH- bedeuten können,
- E⁶ bis E⁹: unabhängig voneinander S, Se oder NR⁵⁹ bedeuten,
- R⁵⁹, R⁷⁵ und R⁷⁶: unabhängig voneinander C₁- bis C₁₂-Alkyl, C₂- bis C₈-Alkenyl, C₄-bis C₇-Cycloalkyl, C₇- bis C₁₅-Aralkyl, C₆- bis C₁₀-Aryl bedeuten,

und
- R⁷⁵: zusätzlich Wasserstoff bedeutet oder R⁷⁵ und R⁷⁶ in der Bedeutung von NR⁷⁵R⁷⁶ gemeinsam mit dem N-Atom, an das sie gebunden sind, einen fünf-oder sechsgliedrigen Ring bedeuten, der gegebenenfalls weitere Heteroatome enthält,
- R⁶¹ bis R⁶⁸: unabhängig voneinander Wasserstoff, C₁- bis C₆-Alkyl, C₁- bis C₄-Alkoxy, Cyan, C₁- bis C₄-Alkoxycarbonyl oder C₆- bis C₁₀-Aryl bedeuten und
- R⁶¹; R⁶² und R⁶⁷; R⁶⁸: unabhängig voneinander zusätzlich eine -(CH₂)₃-, -(CH₂)₄- oder -CH=CH-CH=CH-Brücke bilden oder
- R⁶²; R⁶³, R⁶⁴; R⁶⁵ und R⁶⁶; R⁶⁷: eine -O-CH₂CH₂-O- oder -O-CH₂CH₂CH₂-O-Brücke bilden,
- v: eine ganze Zahl zwischen 0 und 100 bedeutet,
- R⁸², R⁸³, R⁸⁸ und R⁸⁹: unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten,
- R⁸⁴ bis R¹⁷ und R⁹⁰ bis R⁹³: unabhängig voneinander Wasserstoff oder C₁- bis C₆-Alkyl bedeuten oder
- R⁸⁴; R⁸⁶, R⁸⁵; R⁸⁷, R⁹⁰; R⁹² und/oder R⁹¹; R⁹³: gemeinsam eine -CH=CH-CH=CH-Brücke bilden.

Ebenfalls geeignet als RED₁ sind Anionen wie z.B. I⁻, I⁻₃, Br⁻, SCN⁻.

Über eine Brücke B verknüpfte, gegebenenfalls oligo- oder polymere Redoxsysteme sind beispielsweise solche der Formel

Y-[-(-B-Z-)ₐ-(-B-Y-)_{b}-]_{c}-B-Z (L),

worin
- Y und Z: unabhängig voneinander für einen Rest OX₂ oder RED₁ stehen, wobei aber entweder mindestens ein Y für OX₂ und mindestens ein Z für RED₁ steht oder Y und Z für OX₂ stehen,

wobei
- OX₂: für den Rest eines reversibel elektrochemisch reduzierbaren Redoxsystems steht, und
- RED₁: für den Rest eines reversibel elektrochemisch oxidierbaren Redoxsystems steht,
- B: für ein Brückenglied steht,
- c: für eine ganze Zahl von 0 bis 1000 steht, und
- a und b: unabhängig voneinander für eine ganze Zahl von 0 bis 100 stehen.

Vorzugsweise ist (a+b)·c ≤ 10.000.

Hierbei ist unter reversibel elektrochemisch reduzierbar oder oxidierbar gemeint, dass die Elektronenübertragung ohne oder auch mit Änderung des σ-Gerüsts erfolgen kann ganz im Sinne der oben genannten Definition der erfindungsgemäßen OX₂ und RED₁.

Insbesondere sind mit den elektrochromen Verbindungen der Formel (L) solche der Formeln

OX₂-B-RED₁ (La),

OX₂-B-RED₁-B-OX₂ (Lb),

RED₁-B-OX₂-B-RED₁ (Lc),

OX₂-(B-RED₁-B-OX₂)_{d}-B-RED₁ (Ld),

OX₂-(B-OX₂)ₑ-B-OX₂ (Le)

oder

RED₁-(B-RED₁)_{f}-B-RED₁ (Lf)

gemeint,
worin

OX₂, RED₁ und B die oben angegebene Bedeutung haben,
- d: für eine ganze Zahl von 1 bis 5 steht und
- e und f: unabhängig voneinander für eine ganze Zahl von 0 bis 5 stehen.
Mit OX₂ und RED₁ in den Formeln (L) und (La) bis (Lf) sind insbesondere Reste der oben beschriebenen Redoxsysteme der Formeln (I) bis (X), (CI) bis CIV) und (XX) bis (XXXIII) gemeint, wobei die Bindung zum Brückenglied B über einen der Reste R² bis R¹⁹, R²² bis R²⁷, R²⁸ bis R⁵⁸, R⁶¹, R⁶², R⁶⁷, R⁶⁸, R⁸³, R⁸⁸, R¹²² oder im Falle, dass einer der Reste E¹ oder E² für NR¹ oder einer der Reste E³ bis E¹¹ für NR⁵⁹ oder einer der Reste E¹⁰¹ bis E¹⁰² für NR¹¹⁹ steht, über R¹, R⁵⁹ bzw. R¹¹⁹ erfolgt und die genannten Reste dann für eine direkte Bindung stehen, und
- B: für eine Brücke der Formeln -(CH₂)ₙ- oder -[Y¹ₛ(CH₂)ₘ-Y²]ₒ-(CH₂)ₚ-Y³_{q}- steht, die durch C₁- bis C₄-Alkyl, C₁- bis C₄-Alkoxy, Halogen oder Phenyl substituiert sein kann,
- Y¹ bis Y³: unabhängig voneinander für O, S, NR⁶⁰, COO, CONH, NHCONH, Cyclopentandiyl, Cyclohexandiyl, Phenylen oder Naphthylen stehen,
- R⁶⁰: C₁- bis C₆-Alkyl, C₂- bis C₆-Alkenyl, C₄- bis C₇-Cyaoakyl, C₇- bis C₁₅-Aralkyl oder C₆- bis C₁₀-Aryl bedeutet,
- n: eine ganze Zahl von 1 bis 12 bedeutet,
- m und p: unabhängig voneinander eine ganze Zahl von 0 bis 8 bedeuten,
- o: eine ganze Zahl von 0 bis 6 bedeutet und
- q und s: unabhängig voneinander 0 oder 1 bedeuten.

In ganz besonderem Maße sind mit OX₂ und RED₁ in den Formeln (L) und (La) bis (Lf) Reste der oben beschriebenen Redoxsysteme der Formeln (I), (V), (XX), (XXII), (XXIII), (XXV), (XXVI) und (XXXTII) gemeint.

In einem anderen Typ oligo- oder polymerer Systeme können die Gruppierungen OX₂ und/oder RED₁ auch beispielsweise als Seitenketten an einer Hauptgruppe, beispielsweise einem Poly(meth)acrylat, Silikon, Polycarbonat, Polyurethan, Polyharnstoff, Polyester, Polyamid, Cellulose oder anderen oligo- oder polymeren Systemen angebunden sein.

Beispiele für Metallsalze oder Metallkomplexe, die als OX₂ oder RED₁ eingesetzt werden können, sind Fe^{3+/2+}, Ni^{3+/2+}, Co^{3+/2+}, Cu^{2+/+}, [Fe(CN)₆]^{3-/4-}, Fe₄[Fe(CN)₆]₃^{0/4-}, [Co(CN)₆]^{3-/4-}, [Fe(Cyclopentadienyl)₂]^{0/+}, Lu(Pc)^{2+ bis 2-} (Pc = Phthalocyanin), Fe[Fe(CN)₆]^{0/1-}.

Als Gegenionen für Metallionen und kationische Komplexe kommen alle redox-inerten Anionen X⁻, wie sie später noch genauer beschrieben werden, in Frage, als Gegenionen der anionischen Komplexe alle redox-inerten Kationen M'⁺ in Frage, beispielsweise Alkalimetalle oder quaternierte Ammoniumsalze wie Na⁺, K⁺, N(CH₃)₄⁺, N(C₄H₉)₄⁺, C₆H₅CH₂N(CH₃)₃⁺ und andere.

Mit 0X₂' und RED₁' in den Formeln (CCII) bis (CCIV) sind insbesondere Reste der oben beschriebenen Redoxsysteme der Formeln (I) bis (X), (CI) bis (CIV) und (XX) bis (XXXIII) gemeint, wobei die Bindung zu den Brückengliedern B, B' und B" über einen der Reste R² bis R¹⁹ R²² bis R²⁷ R²⁸ bis R⁵⁸, R⁶¹, R⁶², R⁶⁷, R⁶⁸, R⁸³, R⁸⁸, R¹²² oder im Falle, dass einer der Reste E¹ oder E² für NR¹ oder einer der Reste E³ bis E¹¹ für NR⁵⁹ oder einer der Reste E¹⁰¹ bis E¹⁰² für NR¹¹⁹ steht, über R¹, R⁵⁹ bzw. R¹¹⁹ erfolgt und die genannten Reste dann für eine direkte Bindung stehen. -B'-R²⁰³, -B"-R²⁰⁴ und -B'-R²⁰⁵ haben dann die oben aufgeführte Bedeutung der Reste R² bis R¹⁹, R²² bis R²⁷, R²⁸ bis R⁵⁸, R⁶¹, R⁶², R⁶⁷, R⁶⁸, R⁸³, R⁸⁸, R¹²² oder im Falle, dass einer der Reste E¹ oder E² für NR¹ oder einer der Reste E³ bis E¹¹ für NR⁵⁹ oder einer der Reste E¹⁰¹ bis E¹⁰² für NR¹¹⁹ steht, die Bedeutung von R¹, R⁵⁹ bzw. R¹¹⁹.

In ganz besonderem Maße sind mit OX₂' und RED_{I}' in den Formeln (CCII) bis (CCIV) Reste der oben beschriebenen Redoxsysteme der Formeln (I), (II), (V), (XX), (XXII), (XXIII), (XXV), (XXVI) und (XXXIII) gemeint.

Besonders bevorzugt sind solche erfindungsgemäßen elektrochromen Vorrichtungen die
a) eine elektrochrome Substanz OX₂ der Formeln (CC) oder (CCI) enthält und zusätzlich eine elektrochrome Substanz OX₂ der Formel (I) und eine elektrochrome Substanz RED₁ der Formel (XXVI) enthält oder eine elektrochrome Substanz OX₂-B-RED₁, die als OX₂ einen Rest der Formel (I) und als RED₁ einen Rest der Formel (XXVI) enthält, und gegebenenfalls eine elektrochrome Substanz RED₁ der Formel (XXVI) enthält oder
b) eine elektrochrome Substanz der Formel (CCIII) enthält und zusätzlich eine elektrochrome Substanz OX₂ der Formel (I) und gegebenenfalls eine elektrochrome Substanz RED₁ der Formel (XXVI) enthält oder eine elektrochrome Substanz OX₂-B-RED₁, die als OX₂ einen Rest der Formel (I) und als RED₁ einen Rest der Formel (XXVI) enthält, und gegebenenfalls eine elektrochrome Substanz RED₁ der Formel (XXVI) enthält.

Ganz besonders bevorzugte Kombinationen von Redoxsystemen sind beispielsweise die folgenden:
a1) 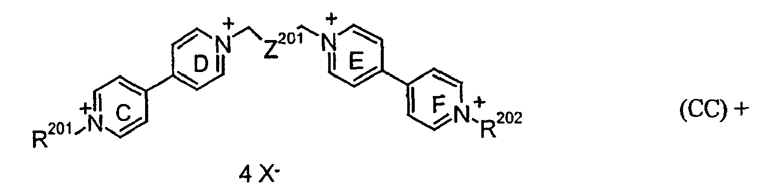 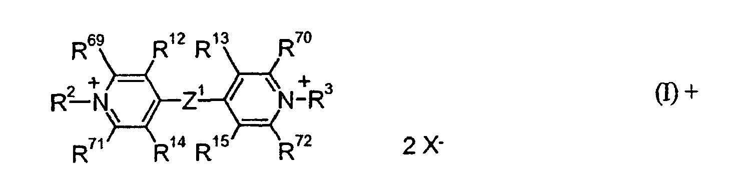 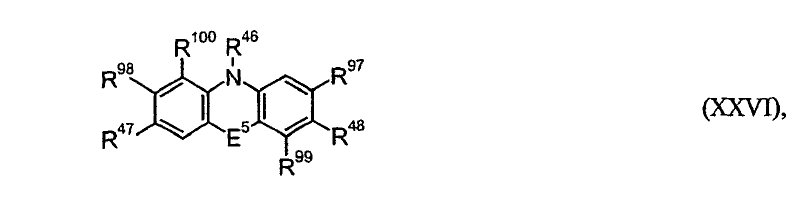
a2) 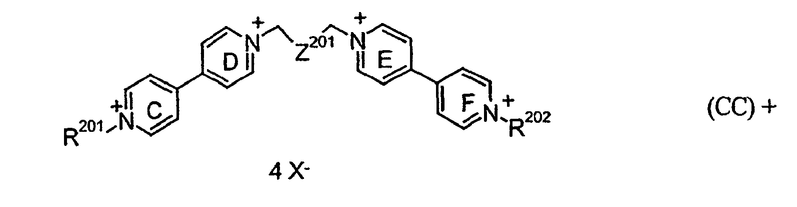 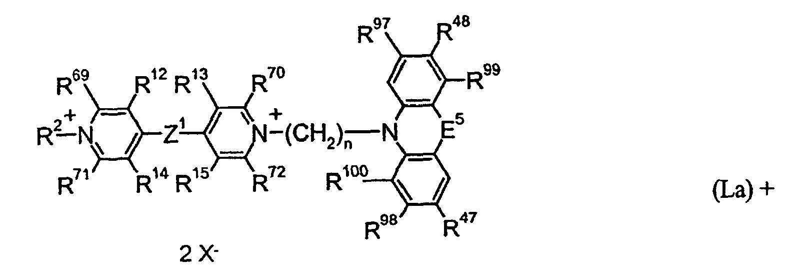 gegebenenfalls 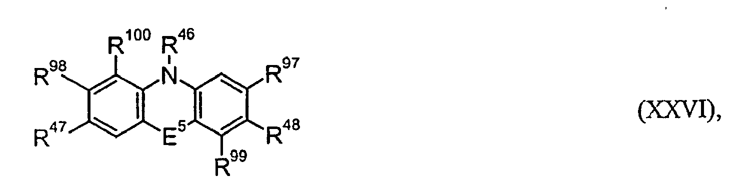
b1) 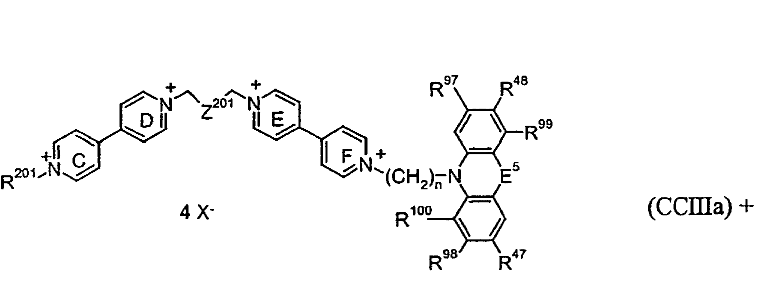 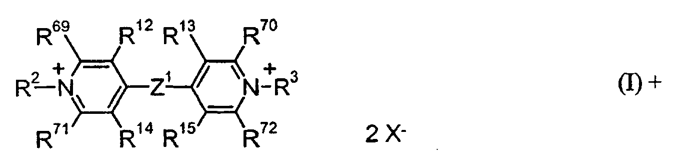 gegebenenfalls 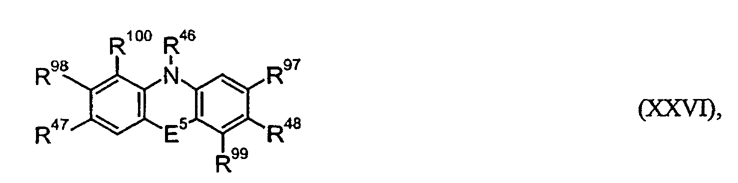
b2) 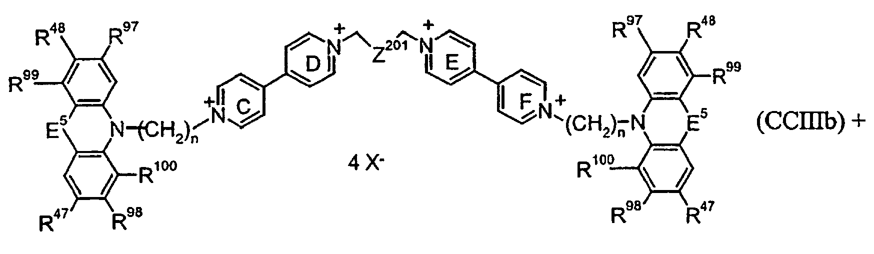 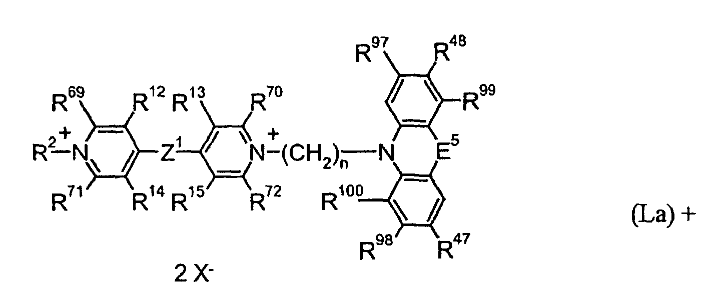 gegebenenfalls

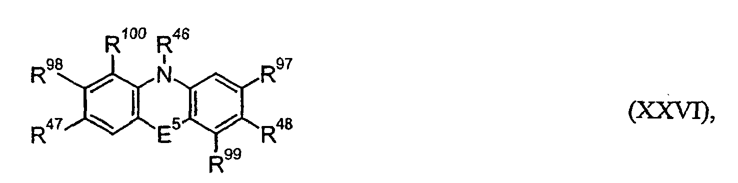

worin
- Z¹: für eine direkte Bindung steht,
- R¹² bis R¹⁵, R⁴⁷, R⁴⁸, R⁶⁹ bis R⁷² und R⁹⁷ bis R¹⁰⁰: für Wasserstoff stehen,
- E⁵: für NR⁵⁹ steht,

die Ringe C bis F nicht verbrückt sind und
die anderen Reste die oben angegebenen allgemeinen, bevorzugten und besonders bevorzugten Bedeutungen besitzen.

Statt der elektrochromen Verbindungen der Formel (XXVI) können in diesen ganz besonders bevorzugten Kombinationen auch analoge Verbindungen der Formel (Lf) 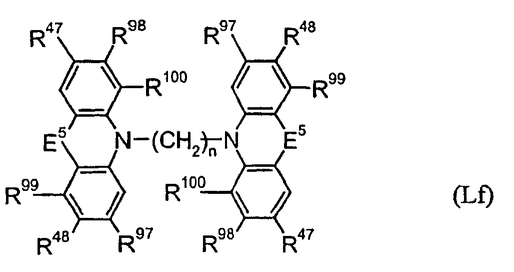 eingesetzt werden,
worin
- R⁴⁷, R⁴⁸, R⁶⁹ bis R⁷² und R⁹⁷ bis R¹⁰⁰: für Wasserstoff stehen,
- E⁵: für NR⁵⁹ steht und
- R⁵⁹ und n: die oben angegebenen allgemeinen, bevorzugten und besonders bevorzugten Bedeutungen besitzen.

Die Mischungsverhältnisse sind in weiten Grenzen variabel. Sie erlauben die Optimierung eines gewünschten Farbtons, insbesondere des Schwärzegrades und/oder die Optimierung der gewünschten Dynamik der Vorrichtung. Die Mischungsverhältnisse können beispielsweise für die folgende Kombination betragen: Formel (CC) 1-25% + Formel (I) 40-90% + Formel (XXVI) 10-90%.

In den oben genannten Substituentenbedeutungen sind Alkylreste, auch abgewandelte, beispielsweise Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie C₁- bis C₄-Alkoxy, Fluor, Chlor, Hydroxy, Cyano, C₁- bis C₄₋Alkoxycarbonyl oder COOH.

Unter Cycloalkylresten werden vorzugsweise solche mit 3 bis 7 C-Atomen, insbesondere mit 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind Phenyl oder Naphthylreste, insbesondere Phenylreste. Sie können durch 1 bis 3 der folgenden Reste substituiert sein: C₁- bis C₆-Alkyl, C₁- bis C₆-Alkoxy, Fluor, Chlor, Brom, Cyano, Hydroxy, C₁- bis C₆-Alkoxycarbonyl oder Nitro. Zwei benachbarte Reste können auch einen Ring bilden.

Unter gegebenenfalls benzanellierten aromatischen oder quasiaromatischen fünf-oder sechsgliedrigen heterocyclischen Ringen werden insbesondere Imidazol, Benzimidazol, Oxazol, Benzoxazol, Thiazol, Benzthiazol, Indol, Pyrazol, Triazol, Thiophen, Isothiazol, Benzisothiazol, 1,3,4- oder 1,2,4-Thiadiazol, Pyridin, Chinolin, Pyrimidin und Pyrazin verstanden. Sie können durch 1 bis 3 der folgenden Reste substituiert sein: C₁- bis C₆-Alkyl, C₁- bis C₆-Alkoxy, Fluor, Chlor, Brom, Cyano, Nitro, Hydroxy, Mono- oder Di-C₁- bis C₆-alkylamino, C₁- bis C₆-Alkoxycarbonyl, C₁- bis C₆-Allcylsulfonyl, C₁- bis C₆- Alkanoylamino, Phenyl oder Naphthyl. Zwei benachbarte Reste können auch einen Ring bilden.

Ein weiterer Gegenstand der Erfindung sind elektrochrome Substanzen der Formeln (CC) bis (CCIV), worin die Reste die oben angegebenen allgemeinen, bevorzugten und besonders bevorzugten Bedeutungen besitzen,
wobei aber in Formel (CC)
- R²⁰¹ und R²⁰²: nicht gleichzeitig Methyl, Ethyl oder Benzyl bedeuten dürfen, wenn Z²⁰¹ CH₂ bedeutet und
- R²⁰¹ und R²⁰²: nicht gleichzeitig Benzyl bedeuten dürfen, wenn Z²⁰¹ o-Phenylen bedeutet und

wobei aber in Formel (CCI) nicht gleichzeitig
- Z²⁰¹: für o-Phenylen steht,
- R²⁰¹ und R²⁰²: gemeinsam eine direkte Bindung bedeuten,
- k: für 1 steht und
- B: für o-Phenylen oder -(CH₂)₃- steht.

Verbindungen der Formel (CC) lassen sich vorteilhaft nach folgendem Schema herstellen:

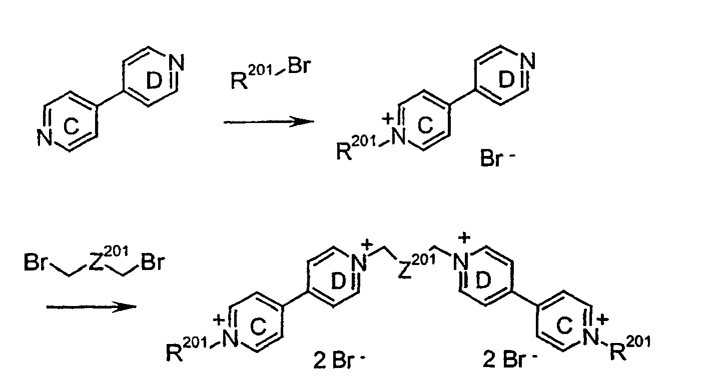

Verbindungen der Formel (CCI) bis (CCIV) lassen sich anolog, insbesondere analog zu Verbindungen der Formel (L) herstellen.

Die elektrochromen Substanzen der Formeln (I) bis (XII), (XX) bis (XXXIII) und (CI) bis (CIV) sind entweder bekannt (Topics in Current Chemistry, Vol. 92, S. 1-44, (1980), Angew. Chem. 90, 927 (1978) oder lassen sich analog herstellen. Die Verbindungen der Formel (L) sind ebenfalls bekannt (WO 97/30134).

Synthetisch bedingte Ionen wie Bromid werden im Anschluß gegen redox-inerte lonen ausgetauscht.

Die erfindungsgemäßen elektrochromen Substanzen der Formel (CC) zeigen im Cyclischen Voltammogramm zwei reversible Reduktionsstufen. Der Abstand der beiden Reduktionspotentiale ΔE = E₂ - E₁ ist gegenüber nicht verbrückten Viologenen oder nicht erfindungsgemäß verbrückten Viologenen mit ansonsten gleichem oder ähnlichem Substitutionsmuster signifikant, d. h. um mindestens 80 mV erhöht.

Ein weiterer Gegenstand der Erfindung ist ein elektrochromes Medium, das mindestens eine elektrochrome Substanz einer der Formeln (CC) bis (CCIV) enthält, worin die Reste die oben angegebenen allgemeinen, bevorzugten und besonders bevorzugten Bedeutungen besitzen.

Das elektrochrome Medium kann gegebenenfalls mindestens ein Lösungsmittel enthalten, in dem die elektrochromen Substanzen, gegebenenfalls ein Leitsalz und gegebenenfalls weitere Zusätze gelöst sind. Das Lösungsmittel kann auch gelförmig verdickt sein, beispielsweise durch Polyelektrolyte, poröse Feststoffe oder Nanopartikel mit großer aktiver Oberfläche. Das elektrochrome Medium enthält insbesondere dann kein Lösungsmittel, wenn die enthaltenen elektrochromen Substanzen oligo- oder polymer sind.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophfle reagieren und so mit den farbigen Radikalionen reagieren könnten. Beispiele sind Propylencarbonat, γ-Butyrolacton, Acetonitril, Propionitril, Benzonitril, Glutaronitril, Methylglutarnitril, 3,3'-Oxydipropionitril, Dimethylformamid, N-Methylpyrrolidon, Sulfolan, 3-Methylsulfolan oder Mischungen davon. Bevorzugt sind Propylencarbonat, Benzonitril und Mischungen untereinander oder mit Glutaronitril oder 3-Methylsulfolan. Insbesondere bevorzugt ist Propylencarbonat. Ebenfalls insbesondere bevorzugt ist Benzonitril.

Das elektrochrome Medium kann mindestens ein inertes Leitsalz enthalten. Insbesondere wenn wenigstens eine der Substanzen des Redoxpaares RED₁/OX₂ ionischer Natur ist, kann auf den Zusatz eines Leitsalzes verzichtet werden.

Als inertes Leitsalz sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen X- in den Formeln (I) bis (VI), (CI), (CII) und (CV) bis (CVII) und in den Metallsalzen kommen alle redox-inerten, farblosen Anionen in Frage.

Beispiele sind Tetrafluoroborat, Tetraphenylborat, Cyano-triphenylborat, Tetramethoxyborat, Tetrapropoxyborat, Tetraphenoxyborat, Perchlorat, Chlorid, Nitrat, Sulfat, Phosphat, Methansulfonat, Ethansulfonat, Tetradecansulfonat, Pentadecansulfonat, Trifluormethansulfonat, Perfluorbutansulfonat, Perfluoroctansulfonat, Benzolsulfonat, Chlorbenzolsulfonat, Toluolsulfonat, Butylbenzolsulfonat, tert. Butylbenzolsulfonat, Dodecylbenzolsulfonat, Trifluormethylbenzolsulfonat, Hexafluorophosphat, Hexafluoroarsenat, Hexafluorosilicat, 7,8- oder 7,9-Dicarbanido-undecaborat(-1) oder (-2), die gegebenenfalls an den B- und/oder C-Atomen durch eine oder zwei Methyl-, Ethyl-, Butyl- oder Phenyl-Gruppen substituiert sind, Dodecahydro-dicarbadodecaborat(-2) oder B-Methyl-C-phenyl-dodecahydro-dicarbadodecaborat(-1).

Ebenfalls geeignet, auch als Anionen X⁻ in den Formeln (CC) bis (CCIV), (I) bis (VI), (CI), (CII) und (CV) bis (CVII) und in den Metallsalzen, sind die oben erwähnten Anionen, die auch die Rolle eines RED₁ übernehmen können, beispielsweise I⁻,I₃⁻.

Die Leitsalze werden vorzugsweise im Bereich 0 bis 1 mol/l eingesetzt.

Als weitere Zusätze können Verdicker eingesetzt werden, um die Viskosität der elektroaktiven Lösung zu steuern. Das kann Bedeutung haben zur Vermeidung von Segretation, d.h. der Bildung von streifiger oder fleckiger Farbbildung bei längerem Betrieb der elektrochromen Vorrichtung im eingeschalteten Zustand, und zur Steuerung der Ausbleichgeschwindigkeit nach Abschalten des Stroms.

Als Verdicker eignen sich alle für diesen Zweck üblichen Verbindungen wie z.B. Polyacrylat, Polymethacrylat (Luctite L®), Polycarbonat oder Polyurethan.

Als weitere Zusätze für das elektrochrome Medium kommen zum fallweise erwünschten Schutz vor UV-Licht (< 350 nm) UV-Absorber in Frage. Beispiele sind UVINUL® 3000 (2,4-Dihydroxybenzophenon, BASF), SANDUVOR® 3035 (2-Hydroxy-4-n-octyloxybenzophenon, Clariant), Tinuvin® 571 (2-(2H-Benzotriazol-2-yl)-6-dodecyl-4-methylphenol, Ciba), Cyasorb 24™ (2,2'-Dihydroxy-4-methoxybenzophenon, American Cyanamid Company), UVINUL® 3035 (Ethyl-2-cyano-3,3-diphenylacrylat, BASF), UVINUL® 3039 (2-Ethylhexyl-2-cyano-3,3-diphenylacrylat, BASF), UVINUL® 3088 (2-Ethylhexyl-p-methoxycinnamat, BASF), CHIMASSORB® 90 (2-Hydroxy-4-methoxy-benzophenon, Ciba), SANDUVOR® PR-25 (4-Methoxybenzylidenmalonsäuredimethylester, Clariant).

Bevorzugt sind die fünf Letztgenannten. Ebenfalls bevorzugt sind Mischungen von UV-Absorbern, beispielsweise der vier Letztgenannten. Besonders bevorzugt sind die Mischungen aus UVINUL® 3039 und CHIMASSORB® 90 oder SANDUVOR® PR-25 und CHIMASSORB® 90.

Weitere Zusätze können Gelbfilter sein wie z.B.

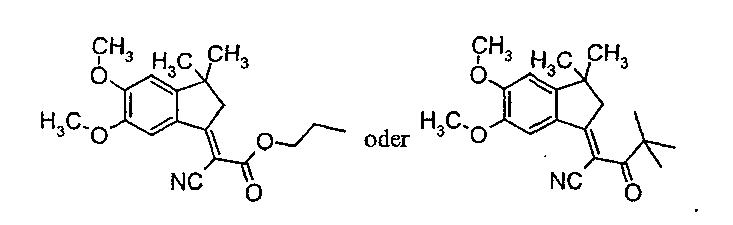

Sie absorbieren zwischen 350 und 400 nm.

Die UV-Absorber und Gelbfilter werden im Bereich 0.01 bis 2 mol/l, vorzugsweise 0,04 bis 1 mol/l eingesetzt.

Das elektrochrome Medium enthält die elektrochromen Substanzen OX₂ und RED₁ jeweils in einer Konzentration von mindestens 10⁻⁴ mol/l, vorzugsweise 0,001 bis 0,5mol/l. Die Gesamtkonzentration aller enthaltenen elektrochromen Substanzen liegt vorzugsweise unter 1 mol/l.

Zum Betrieb der erfindungsgemäßen elektrochromen Vorrichtung wird ein konstanter, gepulster oder in seiner Amplitude sich verändernder, beispielsweise sich sinusförmig verändernder, Gleichstrom benutzt. Die Spannung hängt ab von der gewünschten Farbtiefe, insbesondere aber von den Reduktions- bzw. Oxidationspotentialen der verwendeten OX₂ und RED₁. Solche Potentiale können beispielsweise aus Topics in Current Chemistry, Volume 92, S. 1-44, (1980) oder Angew. Chem. 90, 927 (1978) oder der dort zitierten Literatur entnommen werden. Die Differenz ihrer Potentiale ist ein Richtwert für die erforderliche Spannung, jedoch kann die elektrochrome Vorrichtung bereits bei niedrigerer oder auch mit höherer Spannung betrieben werden. In vielen Fällen, z. B. bei Verwendung von OX₂ = Formel (CC) und RED₁ = Formel (XXVI) liegt diese zum Betrieb nötige Potentialdifferenz ≤ 1 V. Solche elektrochromen Vorrichtungen können deshalb in einfacher Weise mit dem Strom aus photovoltaischen Siliciumzellen versorgt werden.

Wird die Spannung abgeschaltet, geht die erfindungsgemäße elektrochrome Vorrichtung wieder in ihren ursprünglichen Zustand zurück. Diese Löschung kann erheblich beschleunigt werden, wenn die kontaktierten Segmente bzw. Platten kurzgeschlossen werden. Auch durch mehrmaliges Umpolen der Spannung, gegebenenfalls auch bei gleichzeitiger Erniedrigung der Spannung, kann die Anzeige sehr rasch gelöscht werden.

Durch Variation der Schichtdicke der elektrochromen Vorrichtung, der Viskosität der elektrochromen Lösung und/oder der Diffusions- oder Driftfähigkeit der elektrochromen Substanzen lassen sich die Einschalt- und Ausschaltzeiten der Anzeigevorrichtung in weiten Grenzen beeinflussen. So zeigen beispielsweise dünne Schichten kürzere Schaltzeiten als dicke. Es lassen sich also schnell und langsam schaltbare Vorrichtungen bauen und so den jeweiligen Einsatzzwecken optimal anpassen.

Bei langsamen Vorrichtungen, insbesondere Anzeigevorrichtungen, kann zur Aufrechterhaltung der angezeigten Information im eingeschalteten Zustand ein Stromspar- oder Refresh-Mode benutzt werden. Nach Aufbau der anzuzeigenden Information beispielsweise durch konstante oder sich mit hoher Frequenz verändernder oder gepulster Gleichspannung ausreichender Höhe wird auf gepulste oder sich verändernde Gleichspannung niedriger Frequenz umgeschaltet, wobei während der Phasen, in denen die Spannung Null beträgt, die Kontaktierung der Segmente nicht kurzgeschlossen wird. Diese niedrige Frequenz kann beispielsweise im Bereich von 1 Hz oder niedriger liegen, wobei die Dauer der Einschalt- und Ausschaltphasen nicht gleichlang zu sein brauchen, sondern beispielsweise die Ausschaltphasen deutlich länger sein können. Da sich während der Strompausen im nicht kurzgeschlossenen Zustand die Farbtiefe der angezeigten Information nur langsam abbaut, genügen relativ kurz Stromimpulse, um diese Verluste in der anschließenden Refresh-Phase wieder auszugleichen. Man erhält so ein flackerfreies Bild mit nahezu konstanter Farbtiefe, für dessen Aufrechterhaltung aber nur ein Bruchteil des Stromes benötigt wird, der bei permanentem Stromfluß anfallen würde.

Spezielle Ausführungsformen der obengenannten Typen 1 und 2 können beispielsweise die folgenden sein, die ebenfalls Gegenstand der Erfindung sind, wenn sie die erfindungsgemäßen elektrochromen Substanzen enthalten.

Die Verwendung der erfindungsgemäßen elektrochromen Verbindungen der Formel (CC) zusammen mit mindestens einem geeigneten RED₁, z. B. der Formel (XXVI) in einer elektrochromen Vorrichtung zeigt eine deutlich höhere Lichtechtheit der Zelle im eingeschalteten Zustand als eine elektrochrome Vorrichtung, bei der ein analoges nicht verbrücktes Viologen der Formel (I) zusammen mit einem RED₁, z.B. der Formel (XXVI) verwendet wird.

### Typ 1: (unverspiegelt)

aus dem Bereich Lichtschutz/Lichtfilter: Fensterscheiben für Gebäude, Straßenfahrzeuge, Flugzeuge, Eisenbahnen, Schiffe, Dachverglasungen, Autosonnendächer, Verglasung von Gewächshäusern und Wintergärten, Lichtfilter beliebiger Art;
aus dem Bereich Sicherheit/Geheimhaltung: Trennscheiben für Raumteiler in Büros, Straßenfahrzeugen, Flugzeugen, Eisenbahnen, Sichtschutzscheiben an Bankschaltem, Türverglasungen, Scheiben für Motorrad- oder Pilotenhelme;
aus dem Bereich Design: Verglasung von Backöfen, Mikrowellengeräten, anderen Haushaltsgeräten, Möbeln.

Aus dem Bereich Anzeigen: analoge Spannungsanzeigen, als Batterietester, Tankanzeigen, Temperaturanzeigen.

### Typ 1: (verspiegelt)

Spiegel jeglicher Art für Straßenfahrzeuge, Eisenbahnen, insbesondere plane, spärische, asphärische Spiegel und Kombinationen daraus wie spärisch/asphärisch, Spiegelverglasung in Möbeln.

### Typ 2:

Anzeigevorrichtungen jeglicher Art, Segment- oder Matrixanzeigen für Uhren, Computer, Elektrogeräte, Elektronikgeräte wie Radios, Verstärker, Fernseher, CD-Player, Zielanzeige in Bussen und Zügen, Abfahrts- oder Abfluganzeigen in Bahnhöfen und Flughäfen, Flachbildschirme, alle Anwendungen, die unter Typ 1 und 2 genannt sind, die mindestens eine schaltbare, statische oder variable Anzeigevorrichtung enthalten wie Trennscheiben, die Anzeigen wie "Bitte nicht stören "Schalter nicht besetzt" enthalten, Auto-Spiegel, die Anzeigen beliebiger Art enthalten, wie Anzeige der Temperatur, Störungen im Fahrzeug, beispielsweise Öltemperatur, offene Türen, Zeit, Himmelsrichtung.

### Beispiele

### Beispiel 1

Zu 15.0 g 4,4'-Bipyridyl in 90 ml Toluol wurden bei 70°C 9.6 g 3-Phenyl-1-brompropan während 45 min getropft. 24 h wurde bei Rückflußtemperatur gerührt, abgekühlt und abgesaugt. Der Feststoff wurde in 90 ml Toluol 4 h bei Rückflußtemperatur gerührt, abgekühlt, abgesaugt und mit Toluol gewaschen. Nach dem Trocknen im Vakuum erhielt man 14.3 g (85 % d. Th.) 4-(4-Pyridyl)-1-(3-phenylpropyl)pyridiniumbromid.

2.5 g hiervon wurden zusammen mit 0.7 g 1,3-Dibrompropan in 35 ml Butyrolacton unter Zusatz von 0.1 g Tetrabutylammoniumiodid 48 h bei 70°C gerührt. Nach dem Abkühlen wurde abgesaugt, mit wenig Butyrolacton und Toluol gewaschen und im Vakuum getrocknet. Man erhielt 3.0 g (94 % d. Th.) der elektrochromen Substanz der Formel (CCCIa) als beigefarbenes Pulver 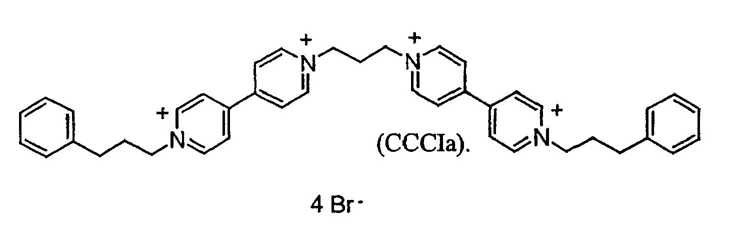
¹H-NMR ([D₆]-DMSO): δ = 2.36 (quint.), 2.71 (t), 2.83 (quint.), 4.78 (t), 4.93 (t), 7.24 (m), 8.88 (dd), 9.5 (dd).

2.0 g hiervon wurden in 45 ml Methanol zum Rückfluß erhitzt. 5.7 g Tetrabutylammoniumtetrafluoroborat wurden zugesetzt. Nach 30 min Kochen unter Rühren wurde die Suspension abgekühlt und abgesaugt. Der Feststoff wurde erneut in 45 ml Methanol eingetragen, mit 2.9 g Tetrabutylammoniumtetrafluoroborat versetzt und 4 h unter Rühren gekocht. Nach dem Abkühlen wurde abgesaugt, mit Methanol gewaschen und im Vakuum getrocknet. Man erhielt 1.5 g (72 % d. Th.) (CCCIb) 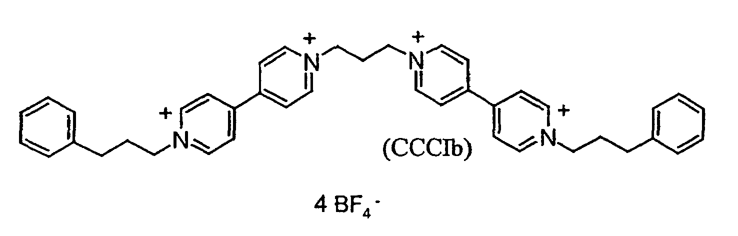
als beiges Pulver.

Cyclisches Voltammogramm (aufgenommen in Acetonitril, Leitsalz Tetrabutylammoniumtetrafluoroborat, glassy Carbon-Elektrode, v = 200 mV/s, Referenzelektrode Ag/AgCl, Potential umgerechnet auf NHE) : E₁ = - 858 mV, E₂ = -311 mV, ΔE = 547 mV.

Analog wurden die folgenden elektrochromen Verbindungen hergestellt:

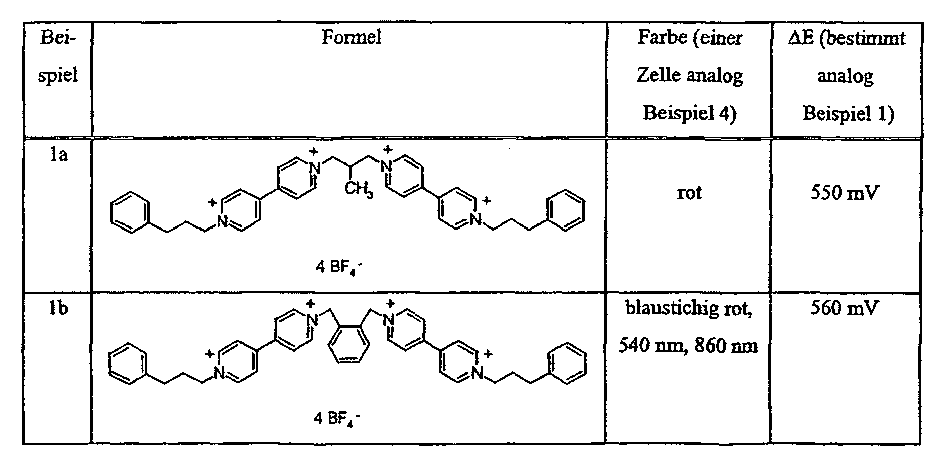

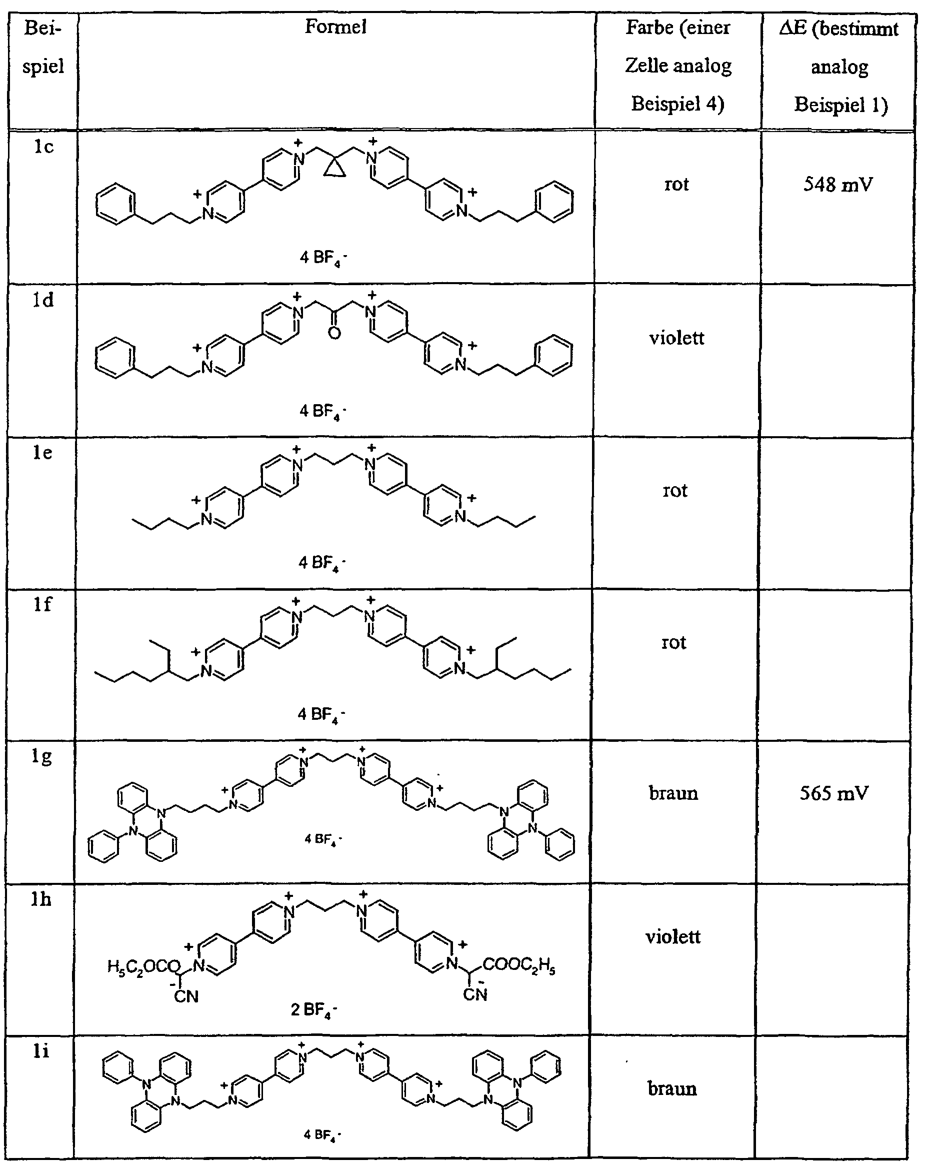

### Beispiel 2

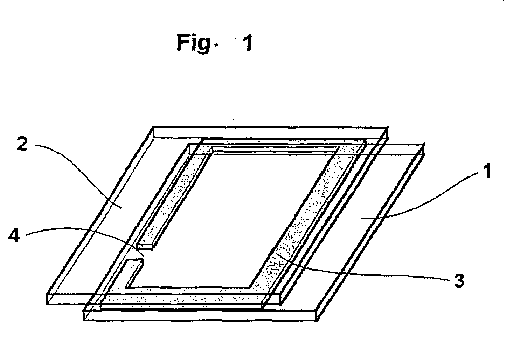

Gemäß Fig. 1 wurde eine Zelle aufgebaut. Es wurden hierzu zwei Glasplatten 1 und 2 benutzt, die auf einer Fläche mit ITO beschichtet sind.

Eine Mischung aus 97 % photohärtendem Epoxikleber DELO-Katiobond® 4594 (DELO Industrieklebstoffe, Landsberg) und 3 % Glaskugeln mit 200 µm Durchmesser wurde ringförmig 3 auf die mit ITO-beschichtete Seite der Glasplatte 1 so aufgetragen, dass eine 2 mm breite Öffnung 4 ausgespart wurde. Nun wurde die Glasplatte 2 so auf die Kleberaupe gelegt, dass die ITO-Schichten der beiden Platten 1 und 2 einander zugewandt waren und eine Geometrie entstand, wie in Fig. 1 gezeigt. Die Aushärtung des Klebers erfolgte durch 10-minütiges Belichten mit Tageslicht in der Nähe eines Fensters und anschließend für 20 min bei 105°C ohne Belichtung.

Eine Schale wurde unter Stickstoffatmosphäre mit einer Lösung gefüllt, die 0,02 molar an der elektrochromen Verbindung der Formel 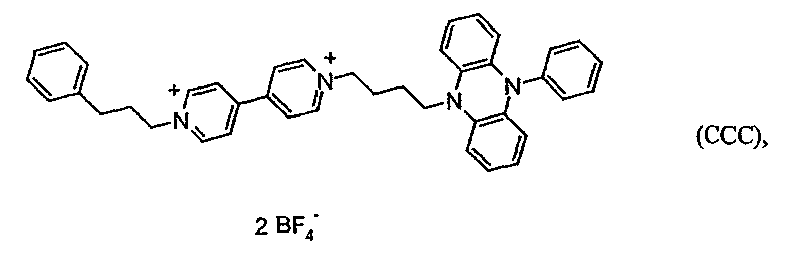 0,0025 molar an der elektrochromen Verbindung der Formel 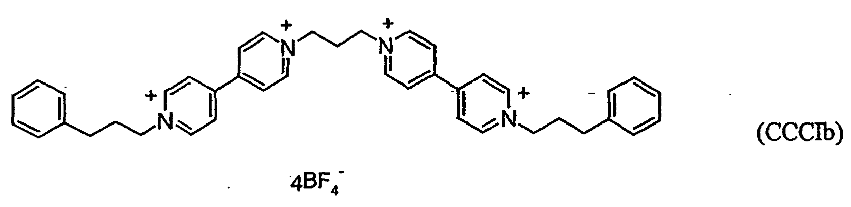 und 0,005 molar an der elektrochromen Verbindung der Formel 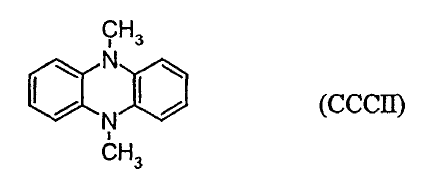 und jeweils 0,1 molar an den UV-Absorbern der Formeln 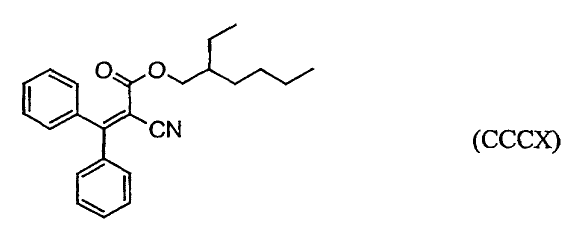 und 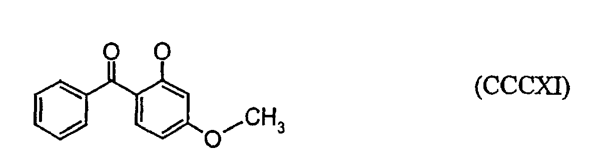 in wasserfreiem, sauerstofffreiem Propylencarbonat war.

Dann wurde die Zelle unter Stickstoffatmosphäre senkrecht so in die Schale gestellt, dass die Öffnung 4 sich unterhalb des Flüssigkeitsspiegels befand. Die Schale mit der Zelle wurde in einen Exsiccator gestellt. Dieser wurde auf 0,05 mbar evakuiert und anschließend vorsichtig mit Stickstoff belüftet. Während der Belüftung stieg die elektrochrome Lösung durch die Öffnung 4 in die Zelle hinein und füllte bis auf eine kleine Blase das gesamte Volumen aus. Die Zelle wurde aus der Lösung entnommen, unter Stickstoffatmoshäre an der Öffnung 4 gereinigt; indem sie mit einem Papiertuch abgeputzt wurde, und mit dem photochemisch härtbaren Acrylatkleber DELO-Photobond® 4497 (DELO Industrieklebstoffe, Landsberg) verschlossen. Anschließend wurde 1 min unter Stickstoffatmosphäre mit der Lampe DELOLUX® 03 (DELO Industrieklebstoffe, Landsberg) die sich in einem Abstand von 8 cm zur Öffnung 4 befand, belichtet und bei Raumtemperatur über Nacht unter Stickstoffatmosphäre ausgehärtet.

Durch Anlegen einer Spannung von 1,2 V an die beiden Platten 1 und 2 färbte sich die Zelle rasch schwarz. Durch Abschalten der Spannung und Kurzschließen der Kontakte verschwand die Färbung wieder rasch. 100 000 solcher Schaltzyklen wurden ohne Veränderung des Schaltverhaltens überstanden.

Im gefärbten Zustand zeigte die Zelle Absorptionsmaxima bei 399 nm, 466 nm, 550 nm, 606 nm, 665 nm und 738 nm mit den jeweiligen Extinktionen von 3,99, 1,64, 1,35, 1,36, 0,95 und 0,65.

### Beispiel 3

Es wurde eine Zelle gebaut wie in Beispiel 2 beschrieben, jedoch wurde die elektrochrome Verbindung der Formel (CCCII) in 0,01 molarer Konzentration eingesetzt.

Durch Anlegen einer Spannung von 1,2 V an die beiden Platten 1 und 2 färbte sich die Zelle rasch schwarz. Durch Abschalten der Spannung und Kurzschließen der Kontakte verschwand die Färbung wieder rasch. 100 000 solcher Schaltzyklen wurden ohne Veränderung des Schaltverhaltens überstanden.

Im gefärbten Zustand zeigte die Zelle Absorptionsmaxima bei 399 nm, 466 nm, 550 nm, 606 nm, 665 nm und 738 nm mit den jeweiligen Extinktionen von 5,36, 2,06, 1,78, 1,82, 1,25 und 0,81.

### Beispiel 4

Es wurde eine Zelle gebaut wie in Beispiel 2 beschrieben, jedoch wurde eine Lösung eingefüllt, die 0,01 molar an der elektrochromen Verbindung der Formel 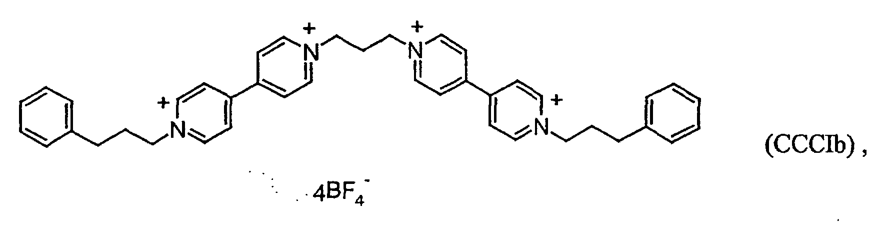 0,02 molar an Ferrocen 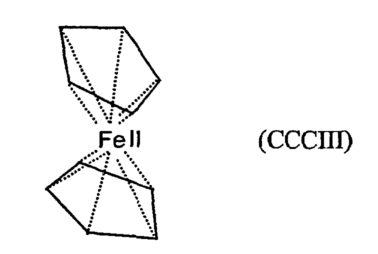 und jeweils 0,1 molar an den UV-Absorbern der Formeln 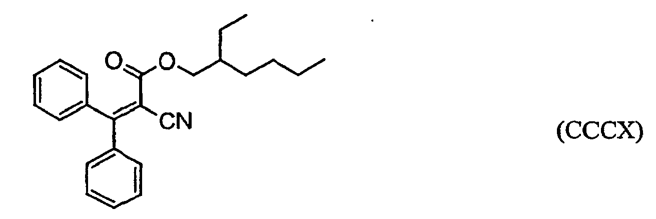 und 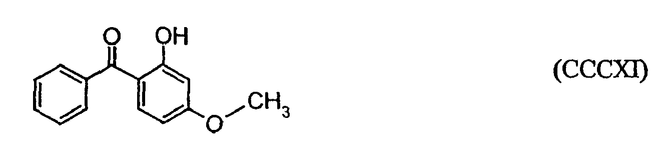 in wasserfreiem, sauerstofffreiem Propylencarbonat war.

Durch Anlegen einer Spannung von 0,9 V an die beiden Platten 1 und 2 färbte sich die Zelle rasch rot. Durch Abschalten der Spannung und Kurzschließen der Kontakte verschwand die Färbung wieder rasch. 100 000 solcher Schaltzyklen wurden ohne Veränderung des Schaltverhaltens überstanden.

Im gefärbten Zustand zeigte die Zelle Absorptionsmaxima bei 538 nm und 847 nm mit den jeweiligen Extinktionen von 1,2 und 0,64.

### Beispiel 5

Es wurde eine Zelle gebaut wie in Beispiel 2 beschrieben, jedoch wurde eine Lösung eingefüllt, die 0,02 molar an der elektrochromen Verbindung der Formel 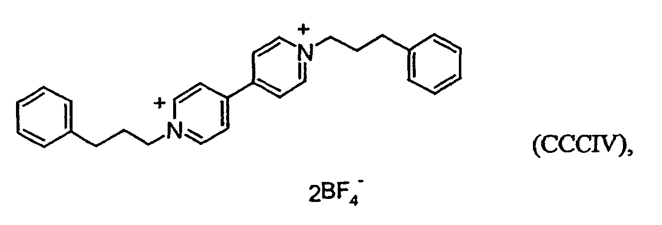 0,007 molar an der elektrochromen Verbindung der Formel 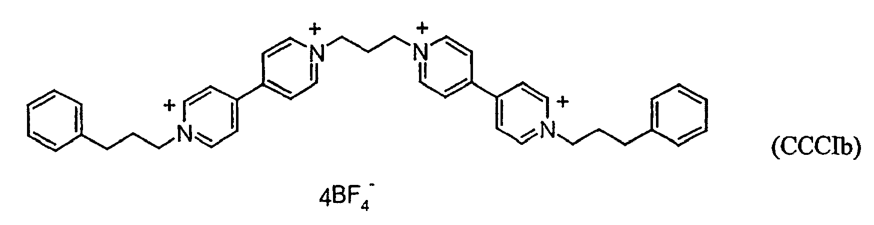 und 0,03 molar an der elektrochromen Verbindung der Formel 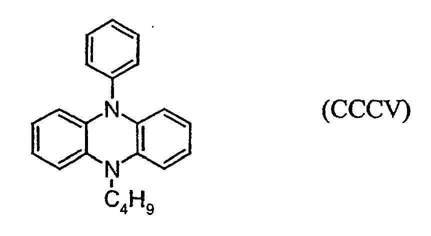 und jeweils 0,1 molar an den UV-Absorbern der Formeln 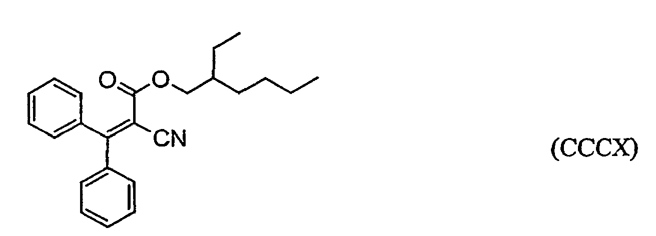 und 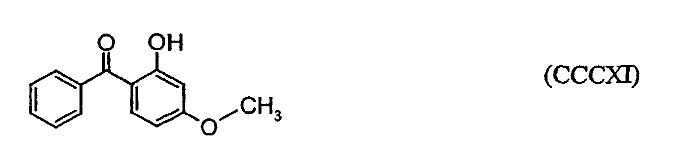 in wasserfreiem, sauerstofffreiem Propylencarbonat war.

Durch Anlegen einer Spannung von 0,9 V an die beiden Platten 1 und 2 färbte sich die Zelle rasch schwarz. Durch Abschalten der Spannung und Kurzschließen der Kontakte verschwand die Färbung wieder rasch. 100 000 solcher Schaltzyklen wurden ohne Veränderung des Schaltverhaltens überstanden.

### Beispiel 6 (Vergleichsbeispiel, nicht erfindungsgemäß)

Analog zu Beispiel 1 wurde unter Verwendung von 1,4-Dibrombutan an Stelle von 1,3-Dibrompropan die elektrochrome Substanz der Formel 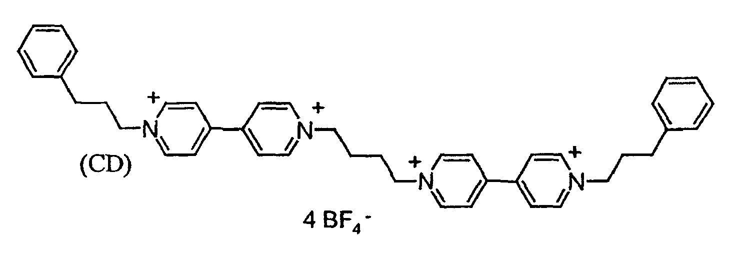 als weißes Pulver hergestellt.

Cyclisches Voltammogramm (aufgenommen wie in Beispiel 1): E₁ = - 818 mV, E₂ = - 375 mV, ΔE = 443 mV.

Es wurde analog zu Beispiel 4 eine Zelle hergestellt, die statt der elektrochromen Verbindung der Formel (CCCIb) 0,01 molar an der elektrochromen Verbindung der Formel (CD) war. Wurden 0,9 V an die Zelle angelegt, so färbte sie sich blau mit Absorptionsmaxima bei 555 nm, 605 nm, 660 nm und 733 nm und den entsprechenden Extinktionen von 0,59, 0,63, 0,36 und 0,22.

### Beispiel 7 (Vergleichsbeispiel, nicht erfindungsgemäß):

### Elektrochrome Verbindung der Formel

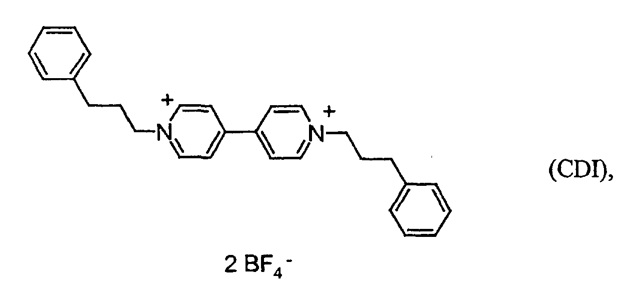

bekannt aus WO 98/44384, Formel C1.

Cyclisches Voltamogramm (aufgenommen wie in Beispiel 1): E₁ = - 810 mV, E₂ = - 390 mV, ΔE = 420 mV.

### Beispiel 8 (Tageslichtechtheit, erfindungsgemäß):

Es wurde eine Zelle hergestellt wie in Beispiel 2 beschrieben, die mit einer Lösung gefüllt wurde, die 0,01 molar an der Verbindung der Formel (CCCIb) (s. Beispiel 2) und 0,02 molar an der Verbindung der Formel (CCCII) (s. Beispiel 2) in wasserfreiem, sauerstofffreiem Propylencarbonat war und keine UV-Absorber enthielt.

### Beispiel 9 (Tageslichtechtheit, Vergleichsbeispiel):

Es wurde eine Zelle hergestellt wie in Beispiel 2 beschrieben, die mit einer Lösung gefüllt wurde, die 0,02 molar an der Verbindung der Formel (CDI) (s. Beispiel 7) und 0,02 molar an der Verbindung der Formel (CCCII) (s. Beispiel 2) in wasserfreiem, sauerstofffreiem Propylencarbonat war und keine UV-Absorber enthielt.

### Lichtstabilitätstest

Zum Test der Lichtstabilität wurden Zellen gemäß Beispiel 8 gemeinsam mit Referenzzellen gemäß Beispiel 9 bei einer Betriebsspannung von 0,9V in einem Testgerät Suntest CPS+ der Firma Atlas, Linsengericht-Altenhaßlau ausgerüstet mit der Filterschale A und einer Bestrahlungsleistung von 765 W/m² belichtet.

Vor Beginn der Bestrahlung wurden mit einem Absorptionsphotometer Cary 4G der Firma Varian, Darmstadt Absorptionsspektren jeder Zelle im geschalteten (0,9 V) und im ungeschalteten Zustand (0V) aufgenommen.

Die Bestrahlung erfolgte in gewissen Intervallen (s. Tabelle). Nach jedem Bestrahlungsintervall wurden wieder Absorptionsmessungen in geschalteten und ungeschalteten Zustand durchgeführt. Aus diesen Messungen wurden die DifferenzSpektren gebildet, wobei jeweils im geschalteten und ungeschalteten Zustand die aktuellen Spektren minus der Ausgangsspektren aufgetragen werden.

Die Schädigung der Zelle wurde durch die Abnahme des elektrochromen Hubes definiert. Dies bedeutet die Abnahme der Transmissionsänderung bei einer bestimmten Wellenlänge.

Ausgewertet wurde die Maximumswellenlänge bei 538 nm bei Zellen des Beispiels 8 und bei 605 nm bei Zellen des Beispiels 9. Bei der Auswertung der Differenzspektren muß beachtet werden, daß Änderungen der Transmission im ungeschalteten Zustand auch in den Differenzspektren des geschalteten Zustands auftauchen unddort substrahiert werden müssen.

In der folgenden Tabelle sind die Abnahme des elektrochromen Hubs über die kumulierte Bestrahlungszeit für die erfindungsgemäße Zelle gemäß Beispiel 8 und als Vergleich dazu die Vergleichszelle gemäß Beispiel 9 aufgetragen.

| In% | 0 h | 70 h | 140h | 210h | 250 h | 500 h | 1100h |
|---|---|---|---|---|---|---|---|
| Zelle gemäß Beispiel 8 | 100 | 97 | 92 | 86 | - | 81 | 55 |
| Zelle gemäß Beispiel 9 | 100 | 84 | 58 | 44 | 40 | - | - |

Definiert man eine signifikante Schädigung der Zelle als Verlust von 20 % des elektrochromen Hubs, so ergibt sich bei der Zelle des Beispiels 9 (nicht erfindungsgemäß) eine Stabilität von ca. 85 Stunden. Mit dem erfindungsgemäßen verbrückten Viologen (Beispiel 8) erhöht sich diese Stabilität auf 500 Stunden, dies entspricht einer Verbesserung um einen Faktor 6.

## Patentansprüche

1. Elektrochrome Vorrichtung, enthaltend ein Paar Glas- oder Kunststoffplatten oder Kunststofffolien, von denen mindestens eine Platte oder Folie, vorzugsweise beide Platten oder Folien auf jeweils einer Seite mit einer elektrisch leitfähigen Beschichtung versehen sind, von denen wenigstens eine Platte oder Folie und ihre leitfähige Beschichtung transparent sind, von denen die andere verspiegelt sein kann und von denen wenigstens bei einer der beiden Platten oder Folien die elektrisch leitfähige Schicht in getrennte, einzeln kontaktierte Flächensegmente aufgeteilt sein kann, wobei die Platten oder Folien über einen Dichtungsring auf den Seiten ihrer leitfähigen Beschichtung zusammengefügt sind, und das Volumen, gebildet aus den beiden Platten oder Folien und dem Dichtungsring, mit einem elektrochromen Medium gefüllt ist, das mindestens eine reduzierbare elektrochrome Substanz OX₂ und mindestens eine oxidierbare elektrochrome Substanz RED₁ enthält, **dadurch gekennzeichnet, dass** ein OX₂ der Formel 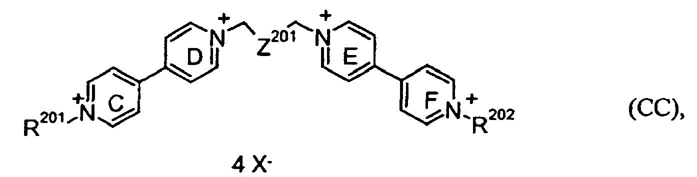 entspricht,
worin
R²⁰¹ und R²⁰² unabhängig voneinander für Alkyl, Cycloalkyl, Alkenyl, Aralkyl, Aryl, -[C(PQ)]⁻ oder eine bivalente Brücke B stehen,
Z²⁰¹ für einen bivalenten Rest der Formeln CR²¹⁰R²¹¹, O, C=O oder o-Phenylen steht,
R²¹⁰ und R²¹¹ unabhängig voneinander für Wasserstoff, Methyl oder Ethyl stehen oder
CR²¹⁰R²¹¹ für C₃- bis C₇-Cycloalkan-1,1-diyl steht,
die Ringe C, D, E und F unabhängig voneinander durch bis zu 4 Alkyl- und/oder Alkoxy-Reste substituiert sein können oder die Ringe C und D bzw. die Ringe E und F über eine -(CH₂)₄- oder -CH=CH-CH=CH- Brücke verbunden sein können,
P und Q unabhängig voneinander für -CN oder -COO-Alkyl stehen und
X⁻ für ein Anion steht.

2. Elektrochrome Vorrichtung gemäß Anspruch 1,
worin
R²⁰¹ und R²⁰² unabhängig voneinander für C₁- bis C₁₈-Alkyl, C₃- bis C₈-Cycloalkyl, C₂- bis C₁₈-Alkenyl, C₇- bis C₁₀-Aralkyl, C₆- bis C₁₀-Aryl oder -[C(CN)₂]⁻ -[C(CN)COO-C₁- bis -C₄-Alkyl]⁻ oder -[C(COO-C₁- bis -C₄-Alkyl)₂]⁻ stehen,
Z²⁰¹ für CH₂, C=O oder o-Phenylen steht,
die Ringe C, D, E und F unabhängig voneinander durch bis zu 4 Methyl-Reste substituiert sein können oder die Ringe C und D bzw. die Ringe E und F über eine -(CH₂)₄- oder-CH=CH-CH=CH- Brücke verbunden sein können und
X⁻ für ein Anion steht.

3. Elektrochrome Vorrichtung gemäß Anspruch 1,
worin
mindestens einer der Reste R²⁰¹ und R²⁰² für eine bivalente Brücke B steht und gegebenenfalls der andere für C₁- bis C₁₈-Alkyl, C₃- bis C₈-Cycloalkyl, C₂- bis C₁₈-Alkenyl, C₇- bis C₁₀-Aralkyl, C₆- bis C₁₀-Aryl oder - [C(CN)₂]⁻, -[C(CN)COO-C₁- bis -C₄-Alkyl]⁻ oder -[C(COO-C₁- bis -C₄₋Alkyl)₂]⁻ steht,
Z²⁰¹ für CH₂, C=O oder o-Phenylen steht,
die Ringe C, D, E und F unabhängig voneinander durch bis zu 4 Methyl-Reste substituiert sein können oder die Ringe C und D bzw. die Ringe E und F über eine -(CH₂)₄- oder -CH=CH-CH=CH- Brücke verbunden sein können und
X⁻ für ein Anion steht,
wobei über die Brücke B eine weitere elektrochrome Substanz der Formel (CC) angebunden sein kann oder aber eine andere elektrochrome Substanz OX₂ bzw. RED₁.

4. Elektrochrome Vorrichtung gemäß Anspruch 2,
worin
R²⁰¹ und R²⁰² unabhängig voneinander für Methyl, Ethyl, Propyl, Butyl, Pentyl, Hexyl, Heptyl, Octyl, Benzyl, Phenethyl, Phenylpropyl, Phenylbutyl oder Phenyl stehen,
Z²⁰¹ für CH₂, C=O oder o-Phenylen steht,
die Ringe C und D bzw. die Ringe E und F über eine -CH=CH-CH=CH- Brücke verbunden sein können und
X⁻ für ein Anion steht.

5. Elektrochrome Vorrichtung gemäß Anspruch 3, **dadurch gekennzeichnet, dass** die Formel (CC) Bestandteil einer der Formeln 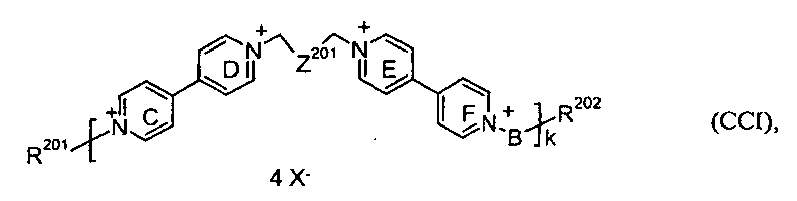 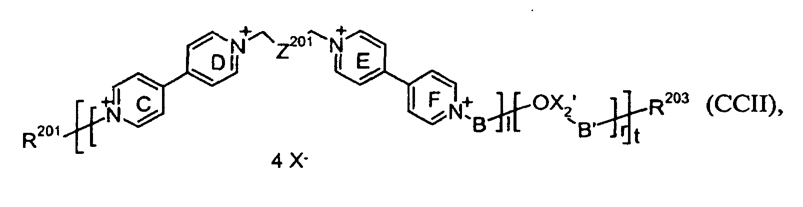 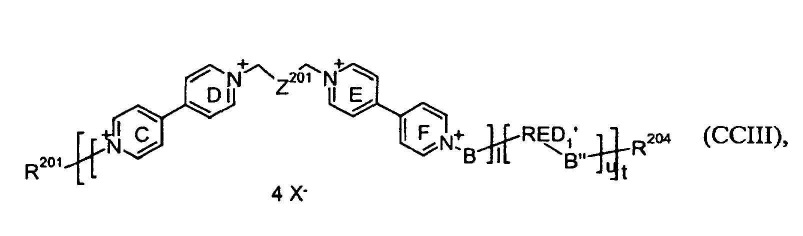 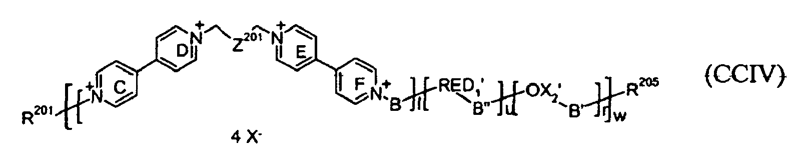 ist,
worin
R²⁰¹ und -B-R²⁰² unabhängig voneinander für Methyl, Ethyl, Propyl, Butyl, Pentyl, Hexyl, Heptyl, Octyl, Benzyl, Phenethyl, Phenylpropyl, Phenylbutyl oder Phenyl stehen oder
R²⁰¹ und R²⁰² in Formel (CCI) gemeinsam eine direkte Bindung bedeuten,
und
R²⁰¹ in Formel (CCII), (CCIII) und (CCIV) für -B-[OX₂'-B'-]ᵣ-R²⁰³ beziehungsweise -B-[RED₁'-B''-]ᵤ-R²⁰⁴ beziehungsweise B-[RED₁'-B''-]ᵤ-[OX2'-B'-]ᵣ-R²⁰⁵ stehen kann,
Z²⁰¹ für CH₂, C=O oder o-Phenylen steht,
die Ringe C und D bzw. die Ringe E und F über eine -CH=CH-CH=CH- Brücke verbunden sein können,
B, B' und B" unabhängig voneinander für eine bivalente Brücke stehen,
-B'-R²⁰³, -B"-R²⁰⁴ und -B'-R²⁰⁵ unabhängig voneinander für Wasserstoff oder für Methyl, Ethyl, Propyl, Butyl, Pentyl, Hexyl, Heptyl, Octyl, Benzyl, Phenethyl, Phenylpropyl, Phenylbutyl oder Phenyl stehen,
OX₂' für den Rest eines reversibel elektrochemisch reduzierbaren Redox-systems steht, und
RED₁' für den Rest eines reversibel elektrochemisch oxidierbaren Redoxsystems steht,
k für eine ganze Zahl von 2 bis 1000 steht,
l, r und u unabhängig für eine ganze Zahl von 1 bis 100 stehen,
t und w unabhängig voneinander für eine ganze Zahl von 1 bis 1000 stehen und
X⁻ für ein Anion steht.

6. Elektrochrome Vorrichtung der Formel (CCIII) gemäß Anspruch 5,
worin
l, u und t 1 bedeuten.

7. Elektrochrome Vorrichtung gemäß einem oder mehrerer der Ansprüche 1 bis 6, **dadurch gekennzeichnet, dass** sie
a) eine elektrochrome Substanz OX2 der Formel (CC) oder (CCI) enthält und zusätzlich eine elektrochrome Substanz OX2 der Formel (I) und eine elektrochrome Substanz RED der Formel (XXVI) enthält,
oder
b) eine elektrochrome Substanz OX2 der Formel (CC) oder (CCI) enthält und eine elektrochrome Substanz OX2-B-RED1, die als OX2 einen Rest der Formel (I) und als RED 1 einen Rest der Formel (XXVI) enthält, und gegebenenfalls eine elektrochrome Substanz REDI der Formel (XXVI) enthält,
oder
c) eine elektrochrome Substanz der Formel (CCIII) enthält und zusätzlich eine elektrochrome Substanz OX2 der Formel (I) und gegebenenfalls eine elektrochrome Substanz RED1 der Formel (XXVI) enthält,
oder
d) eine elektrochrome Substanz der Formel (CCIII) enthält und eine elektrochrome Substanz OX2-B-REDI, die als OX2 einen Rest der Formel (I) und als RED1 einen Rest der Formel (XXVI) enthält, und gegebenenfalls eine elektrochrome Substanz RED1 der Formel (XXVI) enthält.

8. Elektrochrome Substanz einer der Formeln (CC) bis (CCIV),
worin die Reste die in den Ansprüchen 1 bis 6 angegebenen Bedeutungen besitzen,
wobei aber in Formel (CC)
R²⁰¹ und R²⁰² nicht gleichzeitig Methyl, Ethyl oder Benzyl bedeuten dürfen, wenn Z²⁰¹ CH₂ bedeutet und
R²⁰¹ und R²⁰² nicht gleichzeitig Benzyl bedeuten dürfen, wenn Z²⁰¹ o-Phenylen bedeutet und
wobei aber in Formel (CCI) nicht gleichzeitig
Z²⁰¹ für o-Phenylen steht,
R²⁰¹ und R²⁰² gemeinsam eine direkte Bindung bedeuten,
k für 1 steht und
B für o-Phenylen oder -(CH₂)₃- steht.

9. Elektrochromes Medium, das mindestens eine elektrochrome Substanz einer der Formeln (CC) bis (CCIV) enthält,
worin die Reste die in den Ansprüchen 1 bis 6 angegebenen Bedeutungen besitzen.

10. Verwendung der elektrochromen Vorrichtung gemäß einem oder mehreren der Ansprüche 1 bis 6 als Fenster oder Trennscheibe oder Sichtschutzscheibe oder Verglasung oder Dachverglasung oder Lichtfilter oder Spiegel oder Anzeigevorrichtung.

## Claims

1. Electrochromic device containing a pair of glass or plastic plates or plastic films, at least one plate or film of which, preferably both plates or films, being provided on in each case one side with an electrically conductive coating, at least one plate or film of which and its conductive coating being transparent, it being possible for the other of which to be mirror-coated, and it being possible on at least one of the two plates or films of which for the electrically conductive layer to be subdivided into separate, individually contacted surface segments, wherein the plates or films are joined together by a sealing ring on the sides of their conductive coating, and the volume formed by the two plates or films and the sealing ring is filled with an electrochromic medium which contains at least one reducible electrochromic substance OX₂ and at least one electrochromic substance RED₁ which can be oxidized, **characterized in that** one OX₂ corresponds to the formula 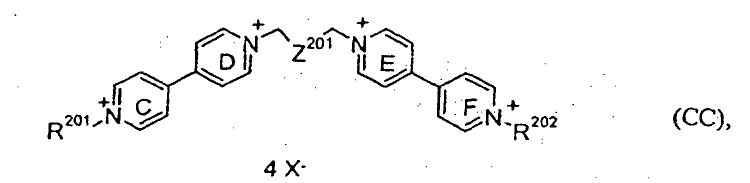
wherein
R²¹⁰ and R²⁰² independently of one another represent alkyl, cycloalkyl, alkenyl, aralkyl, aryl, -[C(PQ)]⁻ or a bivalent bridge B,
Z²⁰¹ represents a bivalent radical of the formulae CR²¹⁰R²¹¹, O, C=O or o-phenylene,
R²¹⁰ and R²¹¹ independently of one another represent hydrogen, methyl or ethyl, or
CR²¹⁰R²¹¹ represents C₃- to C₇-cycloalkane-1,1-diyl,
the rings C, D, E and F independently of one another can be substituted by up to 4 alkyl and/or alkoxy radicals, or the rings C and D and the rings E and F can be bonded by a -(CH₂)₄- or -CH=CH-CH=CH- bridge,
P and Q independently of one another represent -CN or -COO-alkyl and
X⁻ represents an anion.

2. Electrochromic device according to claim 1,
wherein
R²⁰¹ and R²⁰² independently of one another represent C₁- to C₁₈-alkyl, C₃- to C₈-cycloalkyl, C₂₋ to C₁₈-alkenyl, C₇- to C₁₀-aralkyl, C₆- to C₁₀-aryl or -[C(CN)₂]⁻, -[C(CN)COO-C₁- to -C₄-alkyl]⁻ or -[C(COO-C₁- to -C₄-alkyl)₂]⁻,
Z²⁰¹ represents CH₂, C=O or o-phenylene,
the rings C, D, E and F independently of one another can be substituted by up to 4 methyl radicals, or the rings C and D and the rings E and F can be bonded by a -(CH₂)₄- or -CH=CH-CH=CH- bridge and
X⁻ represents an anion.

3. Electrochromic device according to claim 1,
wherein
at least one of the radicals R²⁰¹ and R²⁰² represent a bivalent bridge B and, where appropriate, the other represents C₁- to C₁₈-alkyl, C₃- to C₈₋cycloalkyl, C₂₋ to C₁₈-alkenyl, C₇- to C₁₀-aralkyl, C₆- to C₁₀-aryl or - [C (CN)₂]⁻, - [C (CN) COO-C₁- to -C₄-alkyl]⁻ or -[C(COO-C₁- to -C₄-alkyl)₂]⁻,
Z²⁰¹ represents CH₂, C=O or o-phenylene,
the rings C, D, E and F independently of one another can be substituted by up to 4 methyl radicals, or the rings C and D and the rings E and F can be bonded by a -(CH₂)₄- or -CH=CH-CH=CH- bridge and
X⁻ represents an anion,
wherein a further electrochromic substance of the formula (CC) can be bonded by the bridge B, or another electrochromic substance OX₂ or RED₁.

4. Electrochromic device according to claim 2,
wherein
R²⁰¹ and R²⁰² independently of one another represent methyl, ethyl, propyl, butyl, pentyl, hexyl, heptyl, octyl, benzyl, phenethyl, phenylpropyl, phenylbutyl or phenyl,
Z²⁰¹ represents CH₂, C=O or o-phenylene,
the rings C and D and the rings E and F can be bonded by a -CH=CH-CH=CH- bridge and
X⁻ represents an anion.

5. Electrochromic device according to claim 3, **characterized in that** the formula (CC) is a constituent of one of the formulae 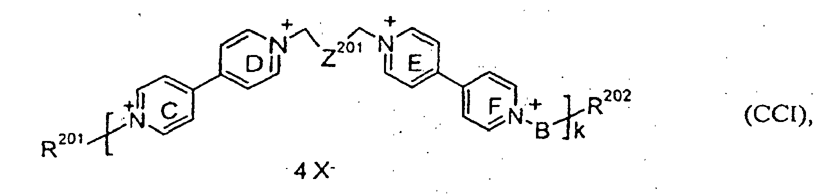 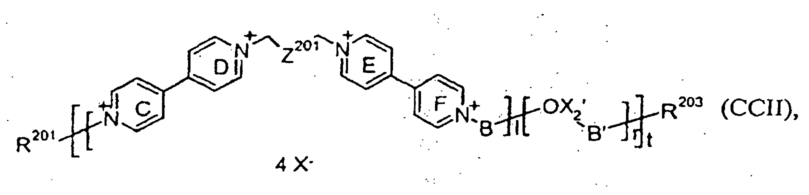 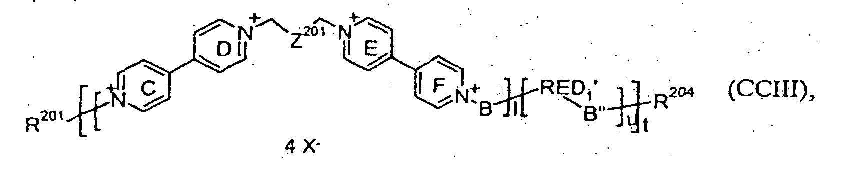 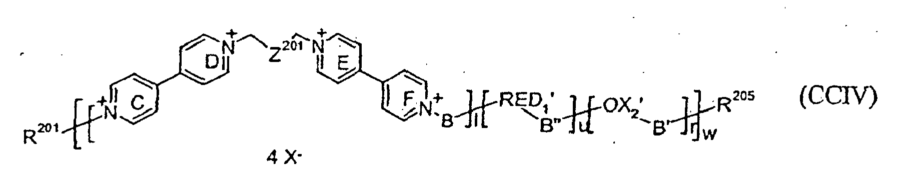
wherein
R²¹⁰ and -B-R²⁰² independently of one another represent methyl, ethyl, propyl, butyl, pentyl, hexyl, heptyl, octyl, benzyl, phenethyl, phenylpropyl, phenylbutyl or phenyl or
R²⁰¹ and R²⁰² in formula (CCI) together denote a direct bond,
and
R²⁰¹ in formula (CCII), (CCIII) and (CCIV) can represent -B-[OX₂'-B'-]ᵣ-R²⁰³ or -B-[RED₁'-B"-]ᵤ-R²⁰⁴ or -B- [RED₁'-B"-]ᵤ-[OX₂'-B'-]ᵣ-R²⁰⁵,
Z²⁰¹ represents CH₂, C=O or o-phenylene,
the rings C and D and the rings E and F can be bonded by a -CH=CH-CH=CH- bridge,
B, B' and B" independently of one another represent a bivalent bridge,
-B'-R²⁰³, -B"-R²⁰⁴ and -B'-R²⁰⁵ independently of one another represent hydrogen or methyl, ethyl, propyl, butyl, pentyl, hexyl, heptyl, octyl, benzyl, phenethyl, phenylpropyl, phenylbutyl or phenyl,
OX₂' represents the radical of a reversibly electrochemically reducible redox system, and
RED1' represents the radical of a reversibly electrochemically oxidizable redox system,
k represents an integer from 2 to 1,000,
l, r and u independently of one another represent an integer from 1 to 100,
t and w independently of one another represent an integer from 1 to 1,000 and
X⁻ represents an anion.

6. Electrochromic device of the formula (CCIII) according to claim 5,
wherein
l, u and t denote 1.

7. Electrochromic device according to one or more of claims 1 to 6, **characterized in that** it
a) contains an electrochromic substance OX2 of the formula (CC) or (CCI) and additionally contains an electrochromic substance OX2 of the formula (I) and an electrochromic substance RED1 of the formula (XXVI),
or
b) contains an electrochromic substance OX2 of the formula (CC) or (CCI) and contains an electrochromic substance OX2-B-RED1, which contains a radical of the formula (I) as OX2 and a radical of the formula (XXVI) as RED1, and optionally an electrochromic substance RED1 of the formula (XXVI),
or
c) contains an electrochromic substance of the formula (CCIII) and additionally contains an electrochromic substance OX2 of the formula (I) and optionally an electrochromic substance RED1 of the formula (XXVI),
or
d) contains an electrochromic substance of the formula (CCIII) and contains an electrochromic substance OX2-B-RED1, which contains a radical of the formula (I) as OX2 and a radical of the formula (XXVI) as RED1, and optionally an electrochromic substance RED1 of the formula (XXVI).

8. Electrochromic substance of one of the formulae (CC) to (CCIV),
wherein the radicals have the meanings given in claims 1 to 6,
but wherein in formula (CC)
R²⁰¹ and R²⁰² may not simultaneously denote methyl, ethyl or benzyl if Z²⁰¹ denotes CH₂ and
R²⁰¹ and R²⁰² may not simultaneously denote benzyl if Z²⁰¹ denotes o-phenylene, and
but wherein in formula (CCI) the following do not occur simultaneously
Z²⁰¹ represents o-phenylene,
R²⁰¹ and R²⁰² together denote a direct bond,
k represents 1 and
B represents o-phenylene or -(CH₂)₃-.

9. Electrochromic medium which contains at least one electrochromic substance of one of the formulae (CC) to (CCIV),
wherein the radicals have the meanings given in claims 1 to 6.

10. Use of the electrochromic device according to one or more of claims 1 to 6 as a window or partition window or inspection protection glass or glazing or roof glazing or light filter or mirror or display device.

## Revendications

1. Dispositif électrochrome, contenant une paire de plaques en verre ou matière plastique ou de feuilles en matière plastique, dont au moins une plaque ou feuille, de préférence les deux plaques ou feuilles sont munies sur chaque fois une face, d'un revêtement conducteur de l'électricité, dont au moins une plaque ou feuille et son revêtement conducteur sont transparents, dont l'autre peut être métallisée et dont pour au moins une des deux plaques ou feuilles, la couche conductrice de l'électricité peut être divisée en segments de surface séparés, individuellement contactés, où les plaques ou feuilles sont assemblées par un joint d'étanchéité, sur la face de leur revêtement conducteur et où le volume, formé par les deux plaques ou feuilles et le joint d'étanchéité, est rempli d'un milieu électrochrome, qui contient au moins une substance électrochrome réductible OX₂ et au moins une substance électrochrome oxydable RED₁, **caractérisé en ce qu'**un OX₂ correspond à la formule : 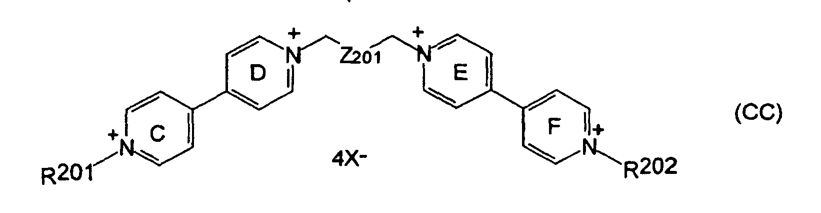
où
R²⁰¹ et R²⁰² représentent indépendamment l'un de l'autre, un radical alcoyle, cycloalcoyle, alcényle, aralcoyle, aryle, [C(PQ)]⁻ ou un pont bivalent B,
Z²⁰¹ représente un reste bivalent de la formule CR²⁰¹R²¹¹, O, C=O ou o-phénylène,
R²¹⁰ et R²¹¹ représentent indépendamment l'un de l'autre, l'atome d'hydrogène, le radical méthyle ou éthyle, ou
CR²¹⁰R²¹¹ représente un radical cycloalcane-1,1-diyle en C₃ à C₇,
les cycles C, D, E et F peuvent être substitués, indépendamment l'un de l'autre, par jusqu'à 4 restes alcoyle et/ou alcoxy ou les cycles C et D ou les cycles E et F peuvent être reliés par un pont (CH₂)₄ ou CH=CH-CH=CH,
P et Q représentent indépendamment l'un de l'autre, CN ou COO-alcoyle, et
X⁻ représente un anion.

2. Dispositif électrochrome selon la revendication 1, où
R²⁰¹ et R²⁰² représentent indépendamment l'un de l'autre, un radical alcoyle en C₁ à C₁₈, cycloalcoyle en C₃ à C₈, alcényle en C₂ à C₁₈, aralcoyle en C₇ à C₁₀, aryle en C₆ à C₁₀, [C (CN)₂]⁻, [C (CN) COO-alcoyle en C₁ à C₄]⁻ ou [C(COO-alcoyle en C₁ à C₄)₂]⁻,
Z²⁰¹ représente CH₂, C=O ou o-phénylène,
les cycles C, D, E et F peuvent être substitués, indépendamment l'un de l'autre, par jusqu'à 4 restes méthyle ou les cycles C et D ou les cycles E et F peuvent être reliés par un pont (CH₂)₄ ou CH=CH-CH=CH,
X⁻ représente un anion.

3. Dispositif électrochrome selon la revendication 1, où
au moins un des restes R²⁰¹ et R²⁰² représente un pont B bivalent et le cas échéant, l'autre un radical alcoyle en C₁ à C₁₈, cycloalcoyle en C₃ à C₈, alcényle en C₂ à C₁₈, aralcoyle en C₇ à C₁₀, aryle en C₆ à C₁₀, ou [C(CN)₂]⁻, [C(CN)COO-alcoyle en C₁ à C₄]⁻ ou [C(COO-alcoyle en C₁ à C₄)₂]⁻,
Z²⁰¹ représente CH₂, C=O ou o-phénylène,
les cycles C, D, E et F peuvent être substitués, indépendamment l'un de l'autre, par jusqu'à 4 restes méthyle ou les cycles C et D ou les cycles E et F peuvent être reliés par un pont (CH₂)₄ ou CH=CH-CH=CH,
X⁻ représente un anion,
où une autre substance électrochrome de la formule (CC) peut être reliée par le pont B, ou une autre substance électrochrome OX₂ ou RED₁.

4. Dispositif électrochrome selon la revendication 2, où
R²⁰¹ et R²⁰² représentent indépendamment l'un de l'autre, un radical méthyle, éthyle, propyle, butyle, pentyle, hexyle, heptyle, octyle, benzyle, phénétyle, phénylpropyle, phénylbutyle ou phényle,
Z²⁰¹ représente CH₂, C=O ou o-phénylène,
les cycles C et D ou les cycles E et F peuvent être reliés par un pont CH=CH-CH=CH, et
X⁻ représente un anion.

5. Dispositif électrochrome selon la revendication 3, **caractérisé en ce que** le constituant de la formule (CC) est l'un des formules : 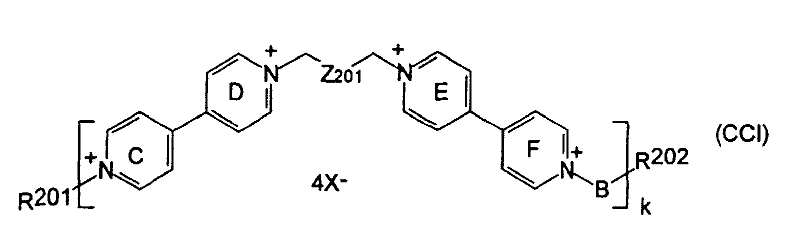 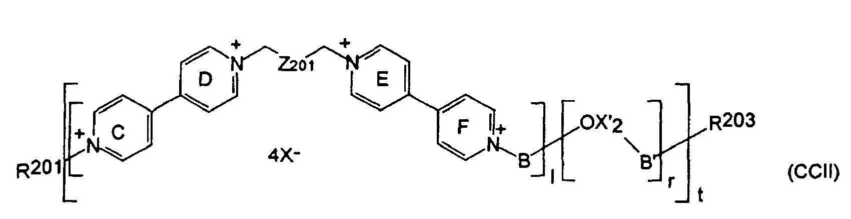 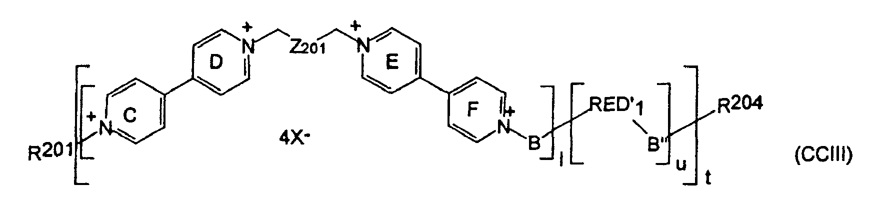 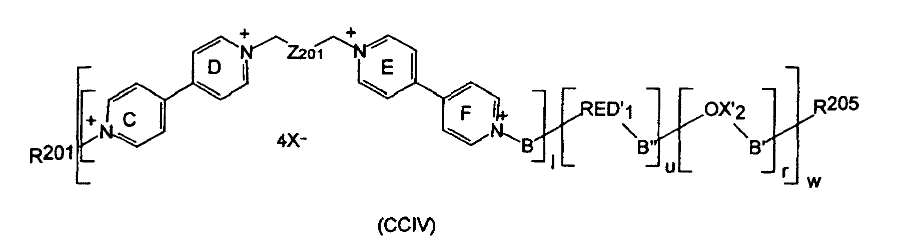
où
R²⁰¹ et B-R²⁰² représentent indépendamment l'un de l'autre, le radical méthyle, éthyle, propyle, butyle, pentyle, hexyle, heptyle, octyle, benzyle, phénétyle, phénylpropyle, phénylbutyle ou phényle, ou
R²⁰¹ et R²⁰² dans la formule (CCI), représentent ensemble une liaison directe, et
R²⁰¹ dans les formules (CCII), (CCIII) et (CCIV) peut représenter B-[OX'₂-B']ᵣ-R²⁰³, ou respectivement B-[RED'₁-B'']ᵤ-R²⁰⁴, ou respectivement B-[RED'₁-B'']ᵤ₋[OX'₂-B']ᵣ-R²⁰⁵,
Z²⁰¹ représente CH₂, C=O ou o-phénylène,
les cycles C et D ou les cycles E et F peuvent être reliés par un pont CH=CH-CH=CH, et
B, B' et B'' représentent indépendamment l'un de l'autre, un pont bivalent,
B'-R²⁰³, B''-R²⁰⁴, et B'-R²⁰⁵ représentent indépendamment l'un de l'autre, l'atome d'hydrogène ou le radical méthyle, éthyle, propyle, butyle, pentyle, hexyle, heptyle, octyle, benzyle, phénétyle, phénylpropyle, phénylbutyle ou phényle,
OX'₂ représente le reste d'un système rédox réductible de manière électrochimique, de manière réversible, et
RED'₁ représente le reste d'un système rédox oxydable de manière électrochimique, de manière réversible,
k représente un nombre entier allant de 2 à 1000,
l, r et u représentent indépendamment, un nombre entier allant de 1 à 100,
t et w représentent indépendamment l'un de l'autre, un nombre entier allant de 1 à 1000, et
X⁻ représente un anion.

6. Dispositif électrochrome de la formule (CCIII) selon la revendication 5, où
l, u et t représentent 1.

7. Dispositif électrochrome selon l'une ou plusieurs des revendications 1 à 6, **caractérisé en ce qu'**il contient
a) une substance électrochrome OX2 de la formule (CC) ou (CCI) et en outre, une substance électrochrome OX2 de la formule (I) et une substance électrochrome RED1 de la formule (XXVI), ou
b) une substance électrochrome OX2 de la formule (CC) ou (CCI) et en outre, une substance électrochrome OX2-B-RED1, qui contient comme OX2, une reste de la formule (I) et comme RED1, un reste de la formule (XXVI), ou
c) une substance électrochrome (CCIII) et en outre, une substance électrochrome OX2 de la formule (I) et le cas échéant, une substance électrochrome RED1 de la formule (XXVI), ou
d) une substance électrochrome (CCIII) et une substance électrochrome OX2-B-RED1, qui contient comme OX2, un reste de la formule (I) et comme RED1, un reste de la formule (XXVI), et le cas échéant, une substance électrochrome RED1 de la formule (XXVI).

8. Substance électrochrome d'une des formules (CC) à (CCIV), où les restes possèdent les significations données aux revendications 1 à 6, mais où dans la formule (CC),
R²⁰¹ et R²⁰² ne peuvent pas représenter simultanément le radical méthyle, éthyle ou benzyle, lorsque Z²⁰¹ représente CH₂, et
R²⁰¹ et R²⁰² ne peuvent pas représenter simultanément le radical benzyle, lorsque Z²⁰¹ représente o-phénylène,
mais où dans la formule (CCI), on n'a pas la situation où simultanément
Z²⁰¹ représente o-phénylène
R²⁰¹ et R²⁰², représentent une liaison directe,
k, représente 1 et
B représente o-phénylène ou (CH₂)₃.

9. Milieu électrochrome, qui contient au moins une substance électrochrome d'une des formules (CC) à (CCIV), où les restes possèdent les significations données aux revendications 1 à 6.

10. Utilisation du dispositif électrochrome selon une ou plusieurs des revendications 1 à 6, comme fenêtre ou panneau de séparation ou panneau de protection visuelle ou vitrage ou vitrage de toit ou filtre lumineux ou miroir ou dispositif d'affichage.
